# EUROPÄISCHE PATENTSCHRIFT

(11) **EP 1 735 203 B1**
(45) Veröffentlichungstag und Bekanntmachung des Hinweises auf die Patenterteilung: **26.09.2007**
(21) Anmeldenummer: 05714169.9
(22) Anmeldetag: 11.03.2005
(51) Int. Cl.: B62D 1/184

(54) **FESTSTELLEINRICHTUNG EINER ZUMINDEST HÖHENVERSTELLBAREN LENKSÄULE**
DEVICE FOR FIXING AN AT LEAST HEIGHT-ADJUSTABLE STEERING COLUMN
DISPOSITIF DE FIXATION D'UNE COLONNE DE DIRECTION AU MOINS REGLABLE EN HAUTEUR

(30) Priorität: 15.04.2004 DE 102004018902
(43) Veröffentlichungstag der Anmeldung: 27.12.2006
(73) Patentinhaber: ThyssenKrupp Presta Aktiengesellschaft, 9492 Eschen (LI)
(72) Erfinder: LUTZ, Christian, A-6714 Nüziders (AT)
(74) Vertreter: Hofmann, Ralf U.
(86) Internationale Anmeldenummer: PCT/AT2005/000087
(87) Internationale Veröffentlichungsnummer: WO 2005/100129

(56) Entgegenhaltungen:
- EP-A- 0 755 842
- US-A- 5 461 937
- PATENT ABSTRACTS OF JAPAN Bd. 010, Nr. 299 (M-524), 11. Oktober 1986 (1986-10-11) & JP 61 110667 A (NISSAN MOTOR CO LTD), 28. Mai 1986 (1986-05-28)

## Beschreibung

Die Erfindung betrifft eine Feststelleinrichtung einer zumindest höhenverstellbaren Lenksäule, mit einer öffen- und schließbaren Spannvorrichtung, die ein über einen Verstellweg zwischen einer Öffnungsstellung und einer Schließstellung verstellbares Spannglied aufweist, in dessen Öffnungsstellung Verzahnungen mindestens eines Feststellteils und mindestens eines Gegenfeststellteils voneinander beabstandet sind und die Höhenverstellung freigegeben ist und bei dessen Verstellung von seiner Öffnungsstellung in seine Schließstellung sich die Verzahnungen gegen die Kraft von mindestens einer zwischen dem Feststellteil und dem Gegenfeststellteil wirkenden Feder in eine Schließrichtung aufeinander zu bewegen und miteinander in Eingriff gelangen.

Verstellbare Lenksäulen sind in unterschiedlichen Ausführungsformen bekannt. Bei Lenksäulen, welche eine Höhenverstellung aufweisen, ist die Höhe des Lenkrades über einen gewissen Bereich verstellbar, wobei eine Verstellung der Neigung der Lenksäule in ihrem an das Lenkrad anschließenden Abschnitt erfolgt. Häufig weisen derartig verstellbare Lenksäulen zusätzlich eine Längenverstellung auf.

Zur Fixierung des die Lenkspindel aufnehmenden und lagernden Mantelrohrs im geschlossenen Zustand der Spannvorrichtung können unterschiedliche Vorrichtungen eingesetzt werden, beispielsweise werden hierzu nach Art einer Lamellenkupplung wirkende Lamellenpakete eingesetzt. Weiters sind Feststelleinrichtungen bekannt geworden, welche zu diesem Zweck Feststellteile mit miteinander in Eingriff bringbaren Verzahnungen aufweisen. Die Verstellung der Lenksäule ist bei solchen Feststelleinrichtungen im geöffneten Zustand der Spannvorrichtung sehr leichtgängig und im geschlossenen Zustand der Spannvorrichtung können hohe Haltekräfte aufgebracht werden. Derartige Feststelleinrichtungen mit im geschlossenen Zustand der Feststelleinrichtung ineinander eingreifenden gezahnten Teilen sind beispielsweise aus der EP 0 836 981 B1 und EP 0 755 842 B1 bekannt. Zum Schließen der Spannvorrichtung wird ein Spannglied verschwenkt, welches hierbei durch ein mit dem Spannglied zusammenwirkendes Kulissenteil, welches Schrägflächen besitzt, in achsialer Richtung eines Spannbolzens verschoben wird, wobei der Spannbolzen ein eine Verzahnung aufweisendes Gegenfeststellteil gegen ein eine Verzahnung aufweisendes Feststellteil zieht. Beim Öffnen des Spanngliedes wird das Gegenfeststellteil vom Feststellteil durch eine zwischen diesen beiden Teilen wirkende Feder abgehoben, wodurch die Höhenverstellung der Lenksäule freigegeben wird.

Weitere Feststellreinrichtungen, bei welchen zur Fixierung der Lenksäule im geschlossenen Zustand einer Spannvorrichtung Verzahnungen eines Feststellteils und eines Gegenfeststellteils miteinander in Eingriff gebracht werden, sind unter anderem aus der EP 0 440 403 B1, US 5,787,759 A, EP 0 125 333 B1 und EP 0 139 295 B1 bekannt. Die letzteren beiden dieser Schriften zeigen sogenannte "Head-Tilt-Lenksäulen", bei welchen die Schwenkachse für die Neigungsverstellung der Lenksäule vergleichsweise nahe beim Lenkrad angeordnet ist. Es kann dadurch ein relativ großer Höheneinstellbereich des Lenkrades bereitgestellt werden. Derartige Head-Tilt-Lenksäulen weisen üblicherweise eine Feder auf, die die Lenksäule beim Öffnen der Spannvorrichtung in ihre vollständig nach oben verschwenkte Endstellung ziehen, wodurch das Ein- und Aussteigen für den Fahrer erleichtert wird. Problematisch ist es hierbei, dass die Zähne der Verzahnungen beim Öffnen der Spannvorrichtung, insbesondere wenn dieses langsam erfolgt, durch die den dem Lenkrad benachbarten Teil der Lenkspindel nach oben ziehenden Feder aneinander entlang ratschen, was zu einem unangenehmen Geräusch und zu einer Abnützung der Zähne führt. Dieses Problem kann auch bei Lenksäulen ohne eine solche den dem Lenkrad benachbarten Teil der Lenkspindel bzw. des die Lenkspindel lagernden Mantelrohrabschnitts beaufschlagenden Feder auftreten, wenn die Lenksäule in der Höhe verstellt wird, bevor die Spannvorrichtung vollständig geöffnet worden ist.

Bei Verzahnungen aufweisenden Feststelleinrichtungen kann das Problem auftreten, dass die Spitzen der Zähne der einander gegenüberliegenden Verzahnungen sich unmittelbar gegenüber stehen ("Zahn-auf-Zahn-Stellung"), wenn die Spannvorrichtung geschlossen werden soll, wodurch die Feststelleinrichtung nicht ordnungsgemäß geschlossen werden kann sondern zuerst eine gewisse Verstellung der Lenksäule erforderlich ist. Es wurden bereits verschiedene Einrichtungen vorgeschlagen, mittels denen das Aufeinandertreffen der Zahnspitzen beim Schließen der Spannvorrichtungen verhindert werden soll, beispielsweise sind in der DE 198 39 496 A1, der US 5,787,759 A, der DE 39 14 608 C1, der EP 0 796 780 A2 und der DE 198 46 292 solche Einrichtungen beschrieben.

Aufgabe der Erfindung ist es, eine Feststelleinrichtung der eingangs genannten Art bereitzustellen, die ein verbessertes Öffnungsverhalten aufweist, wobei insbesondere ein aneinander entlang Ratschen der Verzahnungen des Feststellteils und des Gegenfeststellteils vermindert bzw. möglichst ausgeschlossen werden soll.

Erfindungsgemäß gelingt dies durch eine Feststelleinrichtung mit den Merkmalen des Patentanspruchs 1.

Erfindungsgemäß ist somit zusätzlich zum Spannglied, welches zwischen einer Öffnungsstellung und einer Schließstellung verstellbar ist, mindestens ein Blockierglied vorgesehen, welches eine Blockierstellung, in der es eine Abhebung des Gegenfeststellteils vom Feststellteil blockiert und die Verzahnungen in Eingriff hält, und eine Freigabestellung aufweist, in der das Gegenfeststellteil vom Feststellteil abhebbar ist und die Verzahnungen außer Eingriff bringbar sind. Der Grundgedanke der Erfindung besteht im Zusammenspiel zwischen dem Spannglied und dem Blockierglied. Beim Öffnen des Spanngliedes ausgehend von seiner Schließstellung würde das Gegenfeststellteil ohne das Vorhandensein des Blockiergliedes nach und nach (kontinuierlich) vom Feststellteil abheben, bis bei einer bestimmten Stellung des Spanngliedes die Verzahnungen schließlich ganz außer Eingriff sind. Bis zu dieser Stellung des Spanngliedes blockiert das Blockierglied aber die Abhebung des Gegenfeststellteils vom Feststellteil. Erst wenn das Spannglied die Abhebung des Gegenfeststellteil vom Feststellteil bereits soweit freigibt, dass ihre Verzahnungen außer Eingriff gelangen können, gelangt das Blockierglied durch eine Kopplung mit dem Spannglied in seine Freigabestellung und gibt dadurch die Abhebung des Gegenfeststellteils vom Feststellteil frei. Die Verzahnungen heben sich dann durch die Kraft der mindestens einen Feder vergleichsweise rasch soweit voneinander ab, dass sie nicht mehr miteinander in Eingriff sind, wodurch ein aneinander entlang Rattern bzw. Ratschen der Zähne zumindest weitgehend verhindert wird.

Vorteilhafterweise ist der Übergang des Blockiergliedes zwischen der Blockierstellung und der Freigabestellung abrupt. Das heißt, dass bei einer Öffnung des Spanngliedes ausgehend von seiner Schließstellung sich das Blockierglied zunächst in seiner Blockierstellung befindet, und zwar bis zu einem vorgegebenen Punkt des Verstellweges des Spanngliedes. Vorzugsweise unmittelbar nach Überschreiten dieses Punktes befindet sich das Blockierglied in der Freigabestellung. Zumindest ist der Weg des Spanngliedes, über welchen eine Änderung des Zustandes des Blockiergliedes zwischen der Blockierstellung und der Freigabestellung erfolgt, wesentlich kleiner als der gesamte Verstellweg des Spanngliedes, vorzugsweise kleiner als 1/5 des gesamten Verstellweges des Spanngliedes, wobei ein Wert von weniger als 1/10 besonders bevorzugt ist.

Die Kopplung zwischen dem Spannglied und dem Blockierglied bewirkt, dass das Spannglied bei seinem Öffnen das Blockierglied von seiner Blockierstellung in seine Freigabestellung verstellt (unmittelbar oder mittelbar über ein zwischengeschaltetes Übertragungsglied). Beim Schließen des Spanngliedes ausgehend von seiner Öffnungsstellung kann das Blockierglied ebenfalls durch das Spannglied in seine Blockierstellung verstellt werden oder es kann hierzu eine das Blockierglied in Richtung seiner Schließstellung beaufschlagende Feder vorgesehen sein, wie in der Figurenbeschreibung noch genauer erläutert wird.

In einer vorteilhaften Ausführungsform der Erfindung ist das Spannglied zur Verstellung zwischen seiner Schließstellung und seiner Öffnungsstellung und umgekehrt über einen Schwenkbereich verschwenkbar gelagert. Dieser Schwenkbereich bzw. Winkelbereich bildet in diesem Fall den Verstellweg des Spanngliedes.

In einer vorteilhaften Ausführungsform ist das Blockierglied zur Verstellung zwischen seiner Blockierstellung und seiner Freigabestellung verschwenkbar gelagert.

Eine bevorzugte Ausführungsform der Erfindung sieht vor, dass das Blockierglied eine Anlagefläche aufweist, die in der Blockierstellung zur Blockierung der Abhebung des Gegenfeststellteils vom Feststellteil an einer Gegenanlagefläche des Gegenfeststellteils oder eines Gegendruckteils anliegt. Durch zusammenwirkende Stufen der Anschlagfläche und Gegenanschlagfläche ergibt sich ein abrupter Übergang zwischen der Blockierstellung und der Freigabestellung des Blockiergliedes. Anstelle der Stufen wäre es auch denkbar und möglich, Schrägflächen mit einer ausreichend steilen Neigung (größer als 45°) vorzusehen, sodass sich immer noch ein ausreichend abrupter Übergang zwischen der Blockierstellung und der Freigabestellung ergibt.

In einer vorteilhaften Ausführungsform der Erfindung weist das Spannglied zur Kopplung zwischen dem Spannglied und dem Blockierglied einen Anschlag auf, der bei der Verstellung des Spanngliedes ausgehend von seiner Schließstellung in Richtung seiner Öffnungsstellung im Laufe des ersten Teils des Verstellweges (vorzugsweise in einem Endbereich desselben) an einem Gegenanschlag des Blockiergliedes anschlägt und in der Folge das Blockierglied mitnimmt, sodass es nach diesem ersten Teil des Verstellweges des Spannglieds in seine Freigabestellung gelangt.

Weitere Vorteile und Einzelheiten der Erfindung werden im Folgenden anhand der beiliegenden Zeichnung erläutert. In dieser zeigen:
- Fig. 1 und Fig. 2: perspektivische Darstellungen aus verschiedenen Blickwinkeln einer Lenksäule mit einer ersten Ausführungsform einer erfindungsgemäßen Feststelleinrichtung;
- die Fig. 3 und 4: perspektivische Darstellungen analog den Fig. 1 und 2, teilweise explodiert;
- Fig. 5: eine Ansicht, Blickrichtung A in Fig. 1, ohne das Mantelrohr und die Lenkspindel;
- Fig. 6: einen Schnitt entlang der Linie B-B von Fig. 5, in der Schließstellung des Spanngliedes;
- Fig. 7: einen Schnitt entsprechend Fig. 6, aber in einer Zwischenstellung des Spanngliedes beim Öffnen desselben;
- Fig. 8: einen Schnitt entsprechend Fig. 6, aber in der Öffnungsstellung des Spanngliedes;
- Fig. 9: einen Schnitt entsprechend Fig. 6, aber in einer Zwischenstellung beim Schließen des Spanngliedes;
- Fig. 10: eine perspektivische Darstellung des Spannbolzens;
- Fig. 11: eine perspektivische Darstellung des Blockiergliedes;
- Fig. 12: eine perspektivische Darstellung von Abschnitten des Feststellteils und des Gegenfeststellteils, im geöffneten Zustand der Feststelleinrichtung;
- Fig. 13: eine Seitenansicht der Teile von Fig. 12;
- Fig. 14: eine Draufsicht auf das Gegenfeststellteil, Blickrichtung C in Fig. 13;
- Fig. 15: eine Fig. 12 entsprechende Darstellung, im geschlossenen Zustand der Feststelleinrichtung;
- Fig. 16: eine Seitenansicht entsprechend Fig. 13, im geschlossenen Zustand der Feststelleinrichtung;
- Fig. 17: einen Schnitt entlang der Linie D-D von Fig. 16;
- Fig. 18: eine perspektivische Darstellung einer Lenksäule nach Art einer "Head-Tilt-Lenksäule" mit einer zweiten Ausführungsform einer erfindungsgemäßen Feststelleinrichtung;
- Fig. 19: eine perspektivische Darstellung der Lenksäule von Fig. 18 aus einem anderen Blickwinkel (und ohne Lenkrad);
- Fig. 20: und Fig. 21 perspektivische Darstellungen entsprechend Fig. 18 und Fig. 19, teilweise explodiert;
- Fig. 22: eine Darstellung entsprechend Fig. 21, aber weiter explodiert;
- Fig. 23: und Fig. 24 eine Draufsicht und eine Unteransicht der Lenksäule von Fig. 18;
- Fig. 25: einen Schnitt entlang der Linie E-E von Fig. 23;
- Fig. 26: einen Teilschnitt entlang der Linie F-F von Fig. 25;
- Fig. 27: bis 29 Seitenansichten der Lenksäule in der Mittelstellung (Fig. 27), in der vollständig hochgeschwenkten Stellung (Fig. 28) und in der vollständig nach unten geschwenkten Stellung (Fig. 29);
- Fig. 30: eine Lenksäule nach Art einer "Head-Tilt-Lenksäule" mit einer Feststelleinrichtung gemäß einer dritten Ausführungsform der Erfindung;
- Fig. 31: einen Teilschnitt entlang der Linie G-G von Fig. 30 ohne die vom Mantelrohr aufgenommene Lenkspindel;
- Fig. 32: einen Schnitt entlang der Linie H-H von Fig. 30;
- Fig. 33: und Fig. 34 perspektivische Darstellungen der Lenksäule von Fig. 30, teilweise expiodiert;
- Fig. 35: eine perspektivische Darstellung eines das Spannglied und das Blockierglied aufweisenden Teils der Feststelleinrichtung, im geschlossenen Zustand der Feststelleinrichtung;
- Fig. 36: ein Detail I von Fig. 35;
- Fig. 37: eine perspektivische Darstellung entsprechend Fig. 35, aber im geöffneten Zustand der Feststelleinrichtung;
- Fig. 38: ein Detail K von Fig. 37;
- Fig. 39: eine perspektivische Darstellung des Spannglieds mit einem Abschnitt des Bedienhebels (Offenposition);
- Fig. 40: eine perspektivische Darstellung des Andrückhebels von unten;
- Fig. 41: und Fig. 42 eine Ansicht von unten und eine Seitenansicht des Gegenfeststellteils.
Die Fig. weisen unterschiedliche Maßstäbe auf.

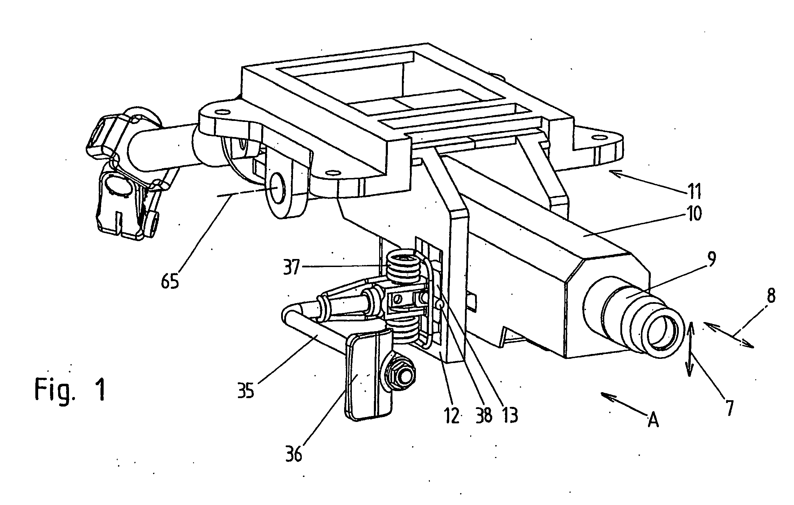

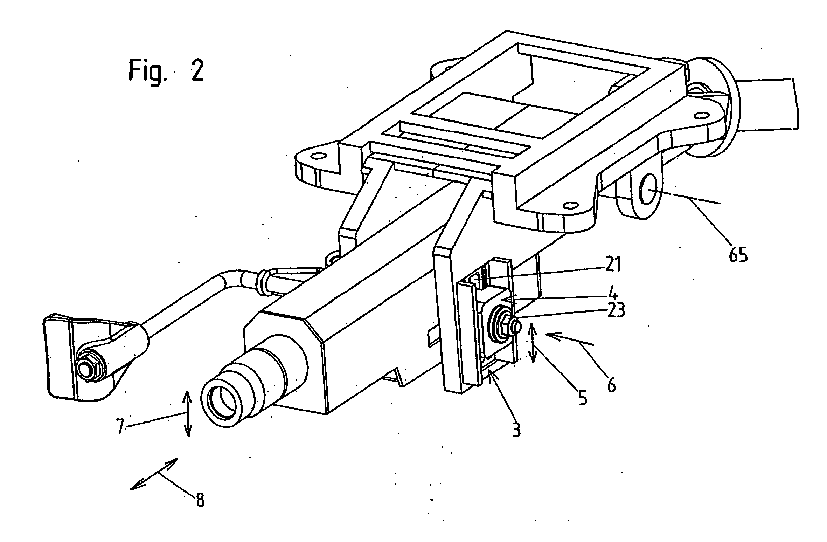

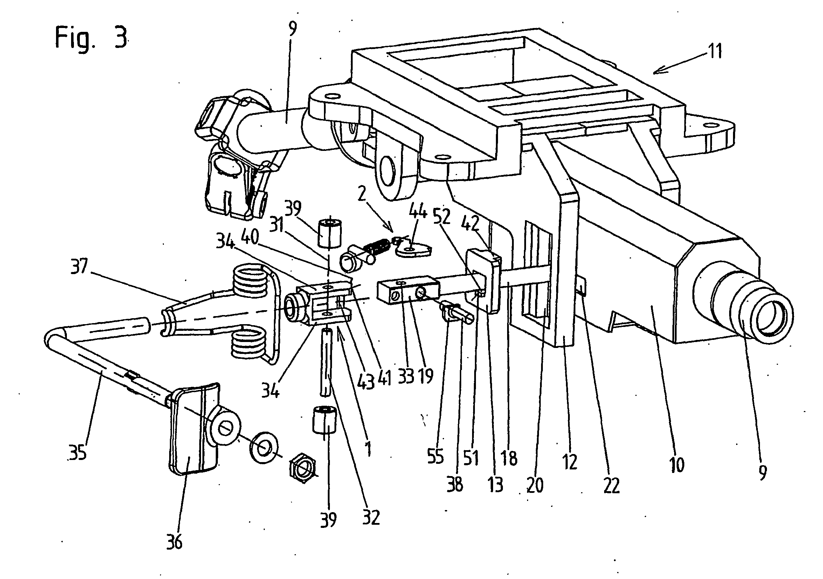

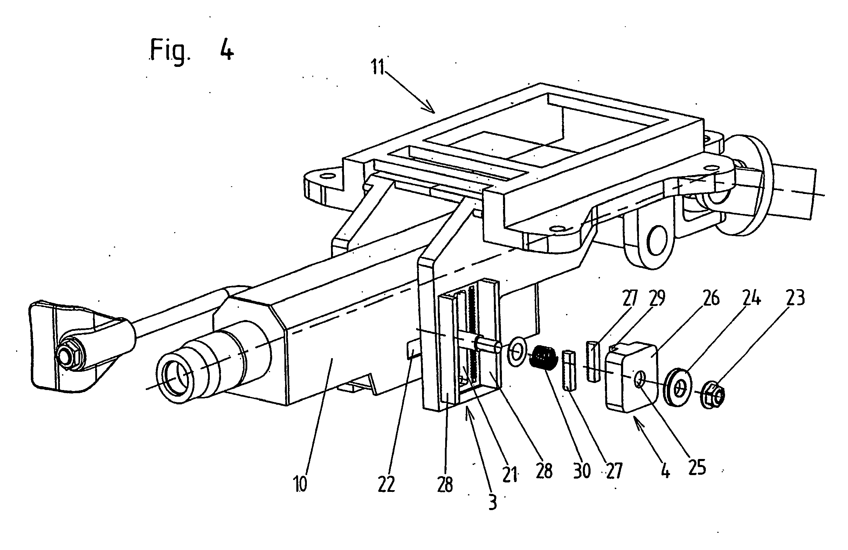

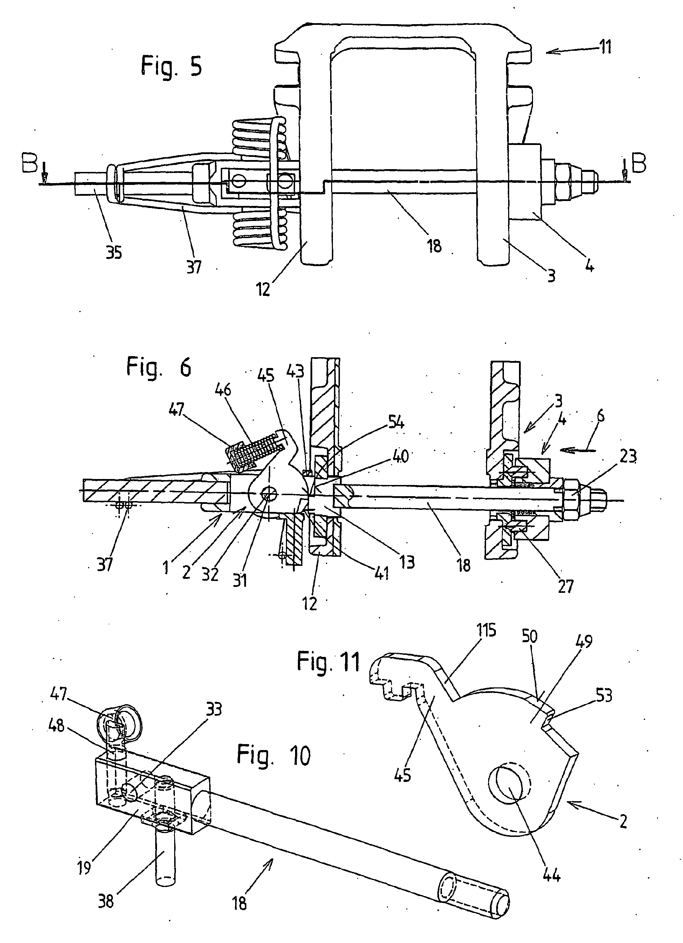

Ein erstes Ausführungsbeispiel der Erfindung wird im Folgenden anhand der Fig. 1 bis 17 erläutert. Die gezeigte Lenksäule ist sowohl höhenverstellbar (= neigungsverstellbar) als auch längenverstellbar (= in achsialer Richtung verstellbar), wobei die Richtungen der Höhenverstellung und der Längenverstellung durch die Doppelpfeile 7, 8 angedeutet sind.

Die Lenksäule weist eine aus mehreren Abschnitten bestehende Lenkspindel 9 auf, deren dem Lenkrad benachbarten Endabschnitt in einem Mantelrohr 10 drehbar gelagert ist und an deren Ende ein in den Fig. 1 bis 17 nicht dargestelltes Lenkrad anbringbar ist. Das Mantelrohr 10 wird von einer Konsoleneinheit 11 getragen, die am Fahrzeugchassis festlegbar ist. Die Konsoleneinheit 11 weist zwei Seitenwangen auf, die sich beidseitig des Mantelrohrs 10 nach unten erstrecken, wobei die eine Seitenwange 12 ein Gegendruckteil 13 verschiebbar lagert und die andere Seitenwange ein Feststellteil 3 bildet, wie weiter unten noch genauer erläutert wird. Bei der Höhenverstellung der Lenksäule erfolgt eine Verschwenkung des dem Lenkrad benachbarten Endstücks der Lenkspindel um eine Schwenkachse 65.

Die Lenksäule besitzt eine Feststelleinrichtung, durch welche die Verstellbarkeit der Lenksäule blockiert werden kann. Hierzu werden Verzahnungen 14-17 des Feststellteils 3 und eines Gegenfeststellteils 4 miteinander in Eingriff gebracht. Um die Verzahnungen 14-17 durch die Verschiebung des Gegenfeststellteils 4 auf das Feststellteil 3 zu (in Schließrichtung 6) miteinander in Eingriff zu bringen, ist eine Spannvorrichtung vorhanden. Im geöffneten Zustand der Spannvorrichtung sind die Verzahnungen 14-17 dagegen außer Eingriff und das Gegenfeststellteil 4 ist gegenüber dem Feststellteil 3 in eine Verschieberichtung 5 verschiebbar, wobei der dem Lenkrad benachbarte Endabschnitt der Lenkspindel 9 in Richtung der Höhenverstellung 7 mitgenommen wird. Die Verschieberichtung 5 weist in Richtung einer Tangente eines gedachten Kreises, der um die Schwenkachse 65 verläuft. Im gezeigten Ausführungsbeispiel liegt die Verschieberichtung 5 parallel zur Richtung der Höhenverstellung 7.

Das Feststellteil 3 ist in Verschieberichtung 5 unverschiebbar. Im gezeigten Ausführungsbeispiel ist es auch in Richtung der Längenverstellung 8 unverschiebbar.

Die Spannvorrichtung umfasst einen Spannbolzen 18, der auf der vom Gegenfeststellteil 4 abgelegenen Seite ein im Querschnitt rechteckiges Endstück 19 besitzt. Der Spannbolzen 18 durchsetzt die Seitenwange 12 und die das Feststellteil 3 bildende Seitenwange der Konsoleneinheit durch Öffnungen 20, 21, die als in Richtung der Höhenverstellung verlaufende Langlöcher ausgebildet sind und in denen der Spannbolzen 18 gegenüber der Konsoleneinheit in Richtung der Höhenverstellung 7 verschiebbar ist. Das Mantelrohr 10 durchsetzt der Spannbolzen 18 durch eine in Richtung der Längenverstellung 8 sich erstreckende Langlochausnehmung 22. Am dem Endstück 19 gegenüberliegenden Ende ist eine Mutter 23 auf ein Außengewinde des Spannbolzens 18 aufgeschraubt, über welche vom Spannbolzen 18 unter Zwischenschaltung der Beilagscheibe 24 ein Zug auf das Gegenfeststellteil 4 ausübbar ist, welches der Spannbolzen durch eine Bohrung 25 durchsetzt.

Das Gegenfeststellteil 4 umfasst einen Grundkörper 26, der bei dieser Ausführungsform Ausnehmungen aufweist, in welchen zwei Zahnleisten 27 festgelegt sind, welche jeweils mit zwei Verzahnungen 16, 17 versehen sind, wie weiter unten noch genauer erläutert. Der Grundkörper 26 und die Zahnleiste 27 können auch einstückig ausgebildet sein.

Im Feststellteil 3 sind beidseitig der in Richtung der Höhenverstellung 7 sich erstreckenden Öffnung 21 ebenfalls in Richtung der Höhenverstellung verlaufende Führungsstege 28 angebracht, die den Grundkörper 26 in der Offenstellung der Spannvorrichtung in Richtung der Höhenverstellung 7 mit Spiel führen und diesen mit Spiel gegen Verdrehung sichern. Der Grundkörper kann zusätzlich oder statt dessen oberhalb und unterhalb der Bohrung 25 angeordnete und in die Öffnung 21 reichende Nasen 29 aufweisen. Im Feststellteil 3 erstrecken sich beidseitig der Öffnung 21 jeweils zwei Verzahnungen 14, 15 in Richtung der Höhenverstellung 7, deren Ausbildung weiter unten noch genauer erläutert wird. Die Länge der Verzahnungen 14, 15 ist größer als diejenige der Verzahnungen 16, 17.

Eine Feder 30 übt eine entgegen der Schließrichtung 6 und im Sinne einer Abhebung des Gegenfeststellteils 4 vom Feststellteil 3 wirkende Kraft auf diese beiden Teile 3, 4 aus (in achsialer Richtung des Spannbolzens 18).

Am Endstück 19 des Spannbolzens 18 ist ein Spannglied 1 verschwenkbar gelagert, und zwar um eine senkrecht zur Schließrichtung 6 stehende Achse 31. Hierzu ist ein Achsstift 32 in einer Bohrung 33 im Endstück 19 festgelegt, der sich durch Öffnungen in Gabelfortsätzen 34 des Spanngliedes 1 erstreckt. Mit einem Fußabschnitt des Spanngliedes 1, von dem die Gabelfortsätze 34 ausgehen, ist ein Bedienarm 35 mit einem Bediengriff 36 verbunden. Das Spannglied 1 wird von einer Feder 37 in seine in den Fig. 1 bis 6 dargestellte Öffnungsstellung beaufschlagt, wobei sich die Feder 37 einerseits am Bedienarm 35, andererseits an einem am Endstück 19 angebrachten Stift 38 abstützt und schraubenförmige Abschnitte der Feder 37 Rollen 39 umgeben, welche auf dem Achsstift 32 angeordnet sind.

Die Gabelfortsätze 34 weisen stirnseitig jeweils zwei winkelig zueinanderstehende Andruckflächen 40, 41 auf, wobei der Winkel zwischen diesen beiden Andruckflächen vorzugsweise im Bereich zwischen 120 und 160° liegt. Die Andruckflächen 40, 41 könnten statt über eine Kante auch über einen Bogen verbunden sein und auch die Ausbildung einer einzelnen gebogenen Andruckfläche wäre denkbar und möglich. Die Andruckflächen 40, 41 wirken mit der dem Spannglied 1 zugewandten Oberfläche des Gegendruckteils 13 zusammen. Dieses wird durch eine Bohrung vom Spannbolzen 18 durchsetzt, wobei diese Bohrung einen rechteckigen Querschnitt aufweist und ein Abschnitt des Endstücks 19 des Spannbolzens 18 in dieser Bohrung liegt, um den Spannbolzen 18 gegen eine Verdrehung um seine Achse zu sichern. Das Gegendruckteil 13 ist gegenüber der Seitenwange 12 in Richtung der Höhenverstellung 7 verschiebbar gelagert, wobei das Gegendruckteil 13 gegen eine Verdrehung um die Längsachse des Spannbolzens 18 gegenüber der Seitenwange 12 gesichert ist. Hierzu wird das Gegendruckteil 13 von einer Vertiefung in der Seitenwange 12 aufgenommen, deren Seitenwandungen ein nur geringes Spiel gegenüber den Seitenrändern des in Ansicht rechteckigen Gegendruckteils aufweisen. Zusätzlich (oder statt dessen) weist das Gegendruckteil für seine Verdrehsicherung oberhalb und unterhalb der Öffnung für den Spannbolzen 18 angeordnete Nasen 42 auf, die in die Öffnung 20 ragen.

Das Spannglied 1 weist weiters einen die Gabelfortsätze 34 in der Nähe ihrer freien Enden überspannenden Steg auf, der einen Anschlag 43 bildet.

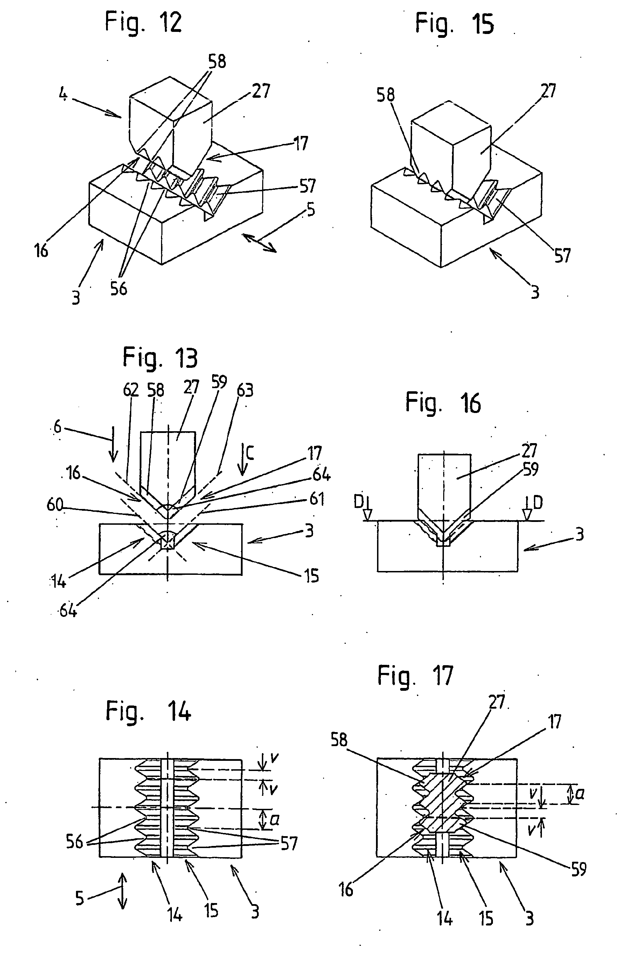

Auf dem Achsstift 32 ist weiters das Blockierglied 2 verschwenkbar gelagert, wobei es zwischen dem Endstück 19 und dem unteren Gabelfortsatz 34 des Spannglieds 1 liegt und vom Achsstift 32 durch eine Bohrung 44 durchsetzt wird. Das Blockierglied 2 weist einen Fortsatz 45 (vgl. z. B. Fig. 6) auf, an welchem eine Feder 46 angreift. Die Feder 46 stützt sich andererseits in einem Federtopf 47 ab, der mittels eines Stifts 48 am Endstück 19 befestigt ist (wie insbesondere aus Fig. 10 ersichtlich ist). Anstelle der Feder 46 kann beispielsweise auch eine das Blockierglied 2 beaufschlagende Torsionsfeder eingesetzt werden.

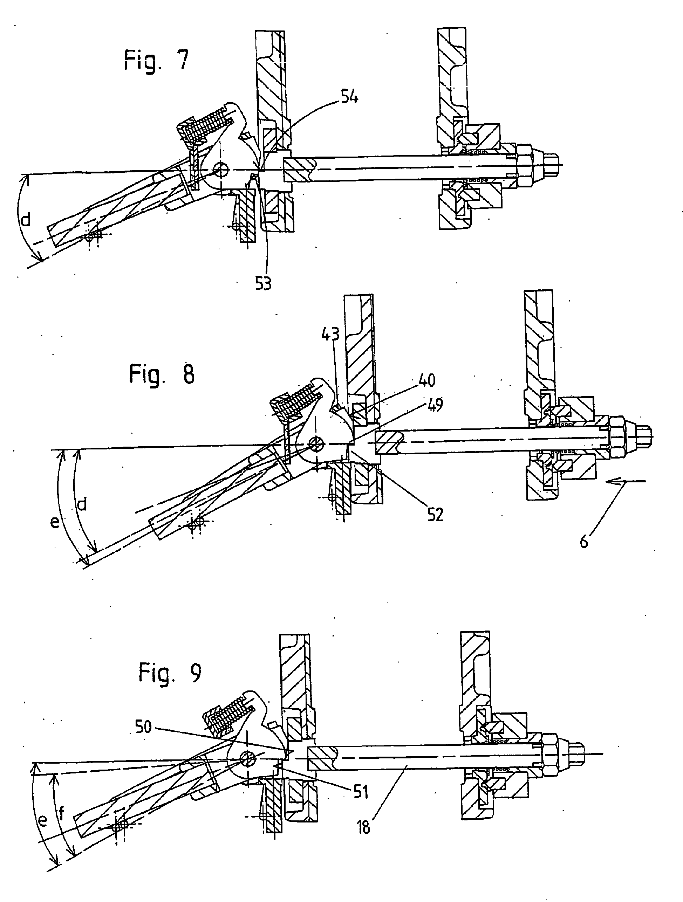

Das Blockierglied 2 ist zwischen einer Blockierstellung, in welcher es eine Abhebung des Gegenfeststellteils 4 vom Feststellteil 3 blockiert und die Verzahnungen 14 -17 in Eingriff hält, und einer Freigabestellung verstellbar, in welcher das Gegenfeststellteil 4 vom Feststellteil 3 abhebbar ist und die Verzahnungen 14, 15 und 16, 17 außer Eingriff bringbar sind. Das Blockierglied 2 besitzt eine Nase 49, welche stirnseitig eine Anlagefläche 50 aufweist. In der Blockierstellung des Blockierglieds 2 wird ein Außer-Eingriff-Gelangen der Verzahnungen 14 bis 17 durch Anlage der Anlagefläche 50 der Nase 49 an der Gegenanlagefläche 51 verhindert, welche von der Stirnseite einer am Gegendruckteil 13 angeordneten Nase 52 gebildet wird. Die Anlagefläche 50 und die Gegenanlagefläche 51 enden an Stufen 53, 54. Sobald das Blockierglied 1 soweit verschwenkt worden ist, dass die Anlagefläche 50 über die Stufe 54 des Gegendruckteils bzw. die Gegenanlagefläche 51 über die Stufe 53 des Blockiergliedes überführt worden ist (Fig. 8) befindet sich das Blockierglied 2 in seiner Freigabestellung.

Der Öffnungs- und Schließvorgang der Spannvorrichtung läuft somit folgendermaßen ab:

In der Schließstellung des Spannglieds 1 (Fig. 1 bis 6) stützt sich die Andruckfläche 40 des Spannglieds 1 am Gegendruckteil 13 ab, wodurch das Gegenfeststellteil 4 über den Spannbolzen 18 gegen die Kraft der Feder 30 mit seinen Verzahnungen 16, 17 in Eingriff mit den Verzahnungen 14, 15 im Feststellteil 3 gebracht wird (vergl. Fig. 6). Das Spannglied 1 wird durch die Feder 37 in die Schließstellung beaufschlagt, in der Schließstellung des Spannglieds 1 weist die Anlagefläche 50 der Nase 49 des Blockierglieds 2 von der Gegenanlagefläche 51 einen kleinen Abstand auf, der jedenfalls kleiner als die Zahnhöhen der Verzahnungen 14 bis 17 ist, vorzugsweise kleiner als die halben Zahnhöhen.

Bei einer Verstellung des Spannglieds 1 ausgehend von seiner Schließstellung in Richtung seiner Öffnungsstellung durch Verschwenkung des Bedienarms 35 legt sich zunächst die Anlagefläche 50 der Nase 49 an die Gegenanlagefläche 51 an und hebt sich in der Folge die Kante zwischen den Andruckflächen 40, 41 zunehmend von der Oberfläche des Gegendruckteils 13 ab, bis die in Fig. 7 ersichtliche Zwischenstellung erreicht ist. Bei dieser Zwischenstellung gemäß Fig. 7 ist der Anschlag 43 des Spannglieds 1 gerade zur Anlage am Rand des Fortsatzes 45 des Blockierglieds 2 gelangt, der einen Gegenanschlag 115 bildet. Bei einer weiteren Verschwenkung des Bedienarms 35, d.h. einer weiteren Verstellung des Spannglieds 1 in Richtung seiner Öffnungsstellung, nimmt der Anschlag 43 das Blockierglied 2 mit (die Feder 46 spannend). Es wird dadurch die Stufe 53 der Nase 49 in Richtung zur Stufe 54 der Nase 52 des Gegendruckteils 13 geführt, wobei zunächst noch die Blockierstellung des Blockierglieds 2 vorliegt. Solange die Stufe 53 der Nase 49 die Stufe 54 der Nase 52 noch nicht erreicht hat, befindet sich das Blockierglied 2 in seiner Blockierstellung. Sobald die Stufe 53 der Nase 49 die Stufe 54 der Nase 52 erreicht hat, schnappt die Nase 49 an der Nase 52 vorbei (durch die Kraft der Feder 30) und das Gegenfeststellteil 4 hebt vom Feststellteil 3 entgegen der Schließrichtung 6 ab. Dies tritt ein, wenn die in Fig. 7 strichliert dargestellte Schwenkstellung des Bedienarms 35 bzw. des Blockierglieds 2 überschritten wird. Ab dieser Stellung des Blockiergliedes 2 befindet sich das Blockierglied 2 in seiner Freigabestellung. Der Verstellweg (der im vorliegenden Ausführungsbeispiel einen Winkelbereich darstellt) bis zu dieser Stellung des Blockierglieds 2 ist in Fig. 7 mit dem Buchstaben d bezeichnet.

Kurz darauf wird die vollständige Öffnungsstellung des Spanngliedes erreicht, die in Fig. 8 dargestellt ist. Es schlägt dann die Andruckfläche 41 an der Oberfläche des Gegendruckteils 13 an. Eine weitere Verschwenkung des Spannglieds 1 wird in der Folge durch einen nicht dargestellten Anschlag blockiert. Der gesamte Verstellweg ist in Fig. 8 mit dem Buchstaben e bezeichnet. Beispielsweise kann der Unterschied zwischen dem ersten Teil des Verstellwegs d und dem vollständigen Verstellweg e 2° betragen.

In der Öffnungsstellung des Spanngliedes 1 kann das Gegenfeststellteil 4 gegenüber dem Feststellteil 3 in die Verschieberichtung 5 verschoben werden, wobei eine Höhenverstellung der Lenksäule durchgeführt wird. Es kann auch eine Feder vorgesehen sein, weiche die Lenksäule im geöffneten Zustand der Spannvorrichtung nach oben verschwenkt.

Bei der Rückstellung des Spannglieds 1 ausgehend von seiner Öffnungsstellung in Richtung seiner Schließstellung wird das Spannglied 1 (und mit ihm das Blockierglied 2) durch Anlage der Kante zwischen den Andruckflächen 40, 41 an der Oberfläche des Gegendruckteils 13 kontinuierlich in Schließrichtung 6 verschoben, wodurch das Gegenfeststellteil 4 vom Spannbolzen 18 kontinuierlich in Schließrichtung 6 verschoben wird. Zwar hebt sich der Anschlag 43 vom Gegenanschlag 15 des Fortsatzes 45 des Blockierglieds 2 ab, sobald die Stufe 53 an der Stufe 54 zur Anlage kommt, das Blockierglied bleibt aber vorerst aufgrund der Anlage der Stufe 53 an der Stufe 54 in seiner Freigabestellung, und zwar über den Teil f des Verstellweges (Fig. 9). Erst kurz bevor das Spannglied 1 seine Schließstellung erreicht (beispielsweise im Bereich von zwei bis fünf Winkelgraden vor der Schließstellung) wird die Stufe 53 über die Stufe 54 angehoben und das Blockierglied 2 verstellt sich durch die Kraft der Feder 46 in seine Blockierstellung. Die Verschwenkung des Blockierglieds 2 wird hierbei durch Anlage am Anschlagplättchen 55 des Stiftes 33 begrenzt. Wenn das Spannglied 1 seine Schließstellung erreicht hat liegt wiederum die Ausgangslage gemäß Fig. 6 vor. Hierbei liegt wiederum ein Spiel zwischen der Anlagefläche 50 der Nase 49 des Blockierglieds 2 und der Gegenanlagefläche 51 vor.

Im letzten Teil des Verstellweges vor Erreichen der Schließstellung besitzt die durch die Feder 37 auf den Spannbolzen 18 über das (kniehebelartig wirkende) Spannglied 1 ausgeübte Zugkraft den höchsten Wert. Um bei jeder Verstellposition der Höhenverstellung ein problemloses Schließen der Spannvorrichtung zu ermöglichen, kann die im Folgenden erläuterte und in den Fig. 12 bis 17 im Einzelnen dargestellte Ausbildung der Verzahnungen 14 -17 vorgesehen werden. Zur Verhinderung einer "Zahn-auf-Zahn-Stellung" sind auch andere Ausbildungen der Verzahnungen bzw. Hilfseinrichtungen bekanntgeworden, beispielsweise aus dem eingangs genannten Stand der Technik. Derartige Ausbildungen der Verzahnungen sind ebenfalls denkbar und möglich.

Beim gezeigten Ausführungsbeispiel der Verzahnungen weisen die beiden Zahnleisten 27 des Gegenfeststellteils 4 jeweils eine erste und eine zweite Verzahnung 16, 17 auf, die mit jeweils ersten und zweiten Verzahnungen 14, 15 des Feststellteils 3 zusammenwirken. Die Verzahnungen 14 - 17 weisen jeweils eine Reihe von Zähnen 56 - 59 auf, deren Spitzen sich entlang von Geraden erstrecken, die senkrecht zur Verschieberichtung 5 liegen. Die Zähne 56 - 59 weisen alle gleiche Abstände a voneinander auf. Die Spitzen der Zähne 58 der ersten Verzahnung 16 des Gegenfeststellteils 4 liegen in einer gemeinsamen Ebene 62, ebenso liegen die Spitzen der Zähne 59 der zweiten Verzahnung 17 des Gegenfeststellteils 4 in einer gemeinsamen Ebene 63. Die Spitzen der Zähne 56, 57 der Verzahnungen 14,15 des Feststellteils 3 liegen ebenfalls jeweils in Ebenen 60, 61.

Die Ebenen 62, 63 der Verzahnungen 16, 17 des Gegenfeststellteils stehen ebenso wie die Ebenen 60, 61 der Verzahnungen 14, 15 des Feststellteils V-förmig zueinander und schließen gleiche Winkel 64 zwischen sich ein. Im gezeigten Ausführungsbeispiel bilden die Verzahnungen 16, 17 des Gegenfeststellteils 4 hierbei zusammen eine Art Pfeilverzahnung und die Verzahnung 14, 15 des Feststellteils eine im Querschnitt V-förmige Vertiefung. Die Ebene 62 liegt parallel zur Ebene 60 und die Ebene 63 liegt parallel zur Ebene 61.

Zwischen den Zähnen 58, 59 der Verzahnungen 16, 17 des Gegenfeststellteils 4 liegt in Verschieberichtung 5 kein Versatz vor, wie dies aus dem Schnitt entsprechend Fig. 17 ersichtlich ist. Das heißt, die Spitzen der Zähne 58, 59 liegen bezüglich einer parallel zur Verschieberichtung 5 sich erstreckenden Linie an den gleichen Stellen, oder anders ausgedrückt, es existiert für eine jeweilige Spitze eines Zahns 58 eine sich zu einer Spitze eines Zahns 59 erstreckende Verbindungsgerade, die senkrecht zur Verschieberichtung 5 liegt.

Dagegen liegt zwischen den Zähnen 56, 57 der Verzahnungen 14, 15 des Feststellteils 3 ein Versatz v vor, d.h. die Spitzen dieser Zähne 56, 57 liegen im Bezug auf eine parallel zur Verschieberichtung 5 sich erstreckenden Linie nicht an den gleichen Stellen. Der Versatz v beträgt in diesem Ausführungsbeispiel gerade die Hälfte des Abstands a zwischen zwei aufeinanderfolgenden Zähnen 56, 57. Man könnte auch sagen, die Verzahnungen 14, 15 des Feststellteils sind gegeneinander phasenverschoben, und zwar in diesem Ausführungsbeispiel um 90° phasenverschoben (entsprechend einem halben Zahn) während die Zähne 58, 59 des Gegenfeststellteils 4 die gleiche Phasenlage aufweisen.

Dies hat zur Folge, dass die Zähne 58, 59 des Gegenfeststellteils 4 nicht gleichzeitig sowohl mit den Zähnen 56 als auch mit den Zähnen 57 des Feststellteils 3 Kopf-an-Kopf-Stellungen einnehmen können. Wenn die Zähne von einer der gegenüberliegenden Verzahnungen 14, 16 bzw. 15, 17 eine Kopf-an-Kopf-Stellung einnehmen, so weisen die Zähne der anderen gegenüberliegenden Verzahnungen 14, 16 bzw. 15, 17 gerade den maximalen Eingriff miteinander auf. In Fig. 17 ist eine der möglichen Zwischenstellungen dargestellt. Je nach Lage der Zähne 56 - 59 zueinander, erfolgt hierbei eine leichte Verschiebung des Gegenfeststellteils 4 gegenüber dem Feststellteil 3 senkrecht zur Verschieberichtung 5 und senkrecht zur Schließrichtung 6 (nach links und rechts in Fig. 17). Diese Verschiebung des Gegenfeststellteils 4 gegenüber dem Feststellteil 3 erfolgt beim Schließen der Spannvorrichtung automatisch, da zwischen dem Spannbolzen 18 und dem Gegenfeststellteil 4 und/oder zwischen dem Spannbolzen 18 und dem Feststellteil 3 ein insgesamt ausreichendes Spiel vorliegt.

Es ist auf diese Weise eine stufenlose Verstellung und Feststellung der Lenkspindel 9 in Richtung der Höhenverstellung 7 möglich.

Unterschiedliche Modifikationen der Verzahnungen 14 - 17 sind denkbar und möglich. So könnten beispielsweise anstelle der Zähne 56, 57 auch die Zähne 58, 59 eine Phasenverschiebung aufweisen. Es könnte auch beispielsweise auf jeder Seite des Spannbolzens 18 anstelle von zwei Verzahnungen nur eine Verzahnung vorhanden sein, wobei die Verzahnungen auf den beiden Seiten des Spannbolzens V-förmig zueinanderstehen und die Zähne der Verzahnungen auf den beiden Seiten des Spannbolzens beim Feststellteil und/oder beim Gegenfeststellteil wiederum phasenverschoben sind.

Mit der Mutter 23 kann die Position des Gegenfeststellteils 4 gegenüber dem Spannbolzen 18 derart eingestellt werden, dass in der Schließstellung des Spannglieds 1 gerade kein Spiel zwischen den Verzahnungen 14 - 17 vorliegt.

Im geschlossenen Zustand der Spannvorrichtung werden weiters die Seitenwange 12 und die das Gegenfeststellteil 4 bildende Seitenwange der Konsoleneinheit 11 an die Seitenflächen des Mantelrohrs 10 angedrückt, wodurch die Längsverstellung der Lenksäule blockiert wird.

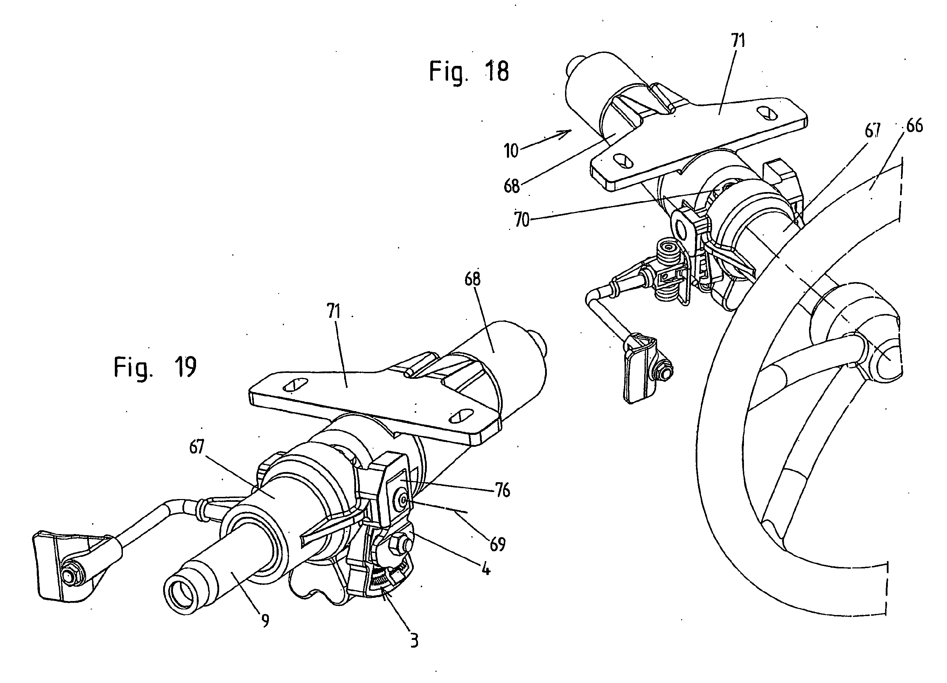

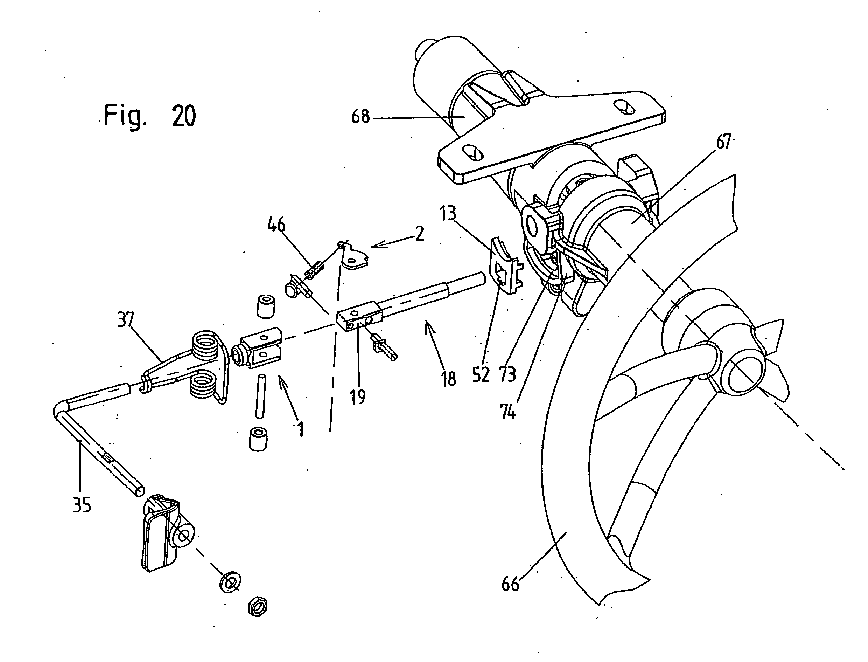

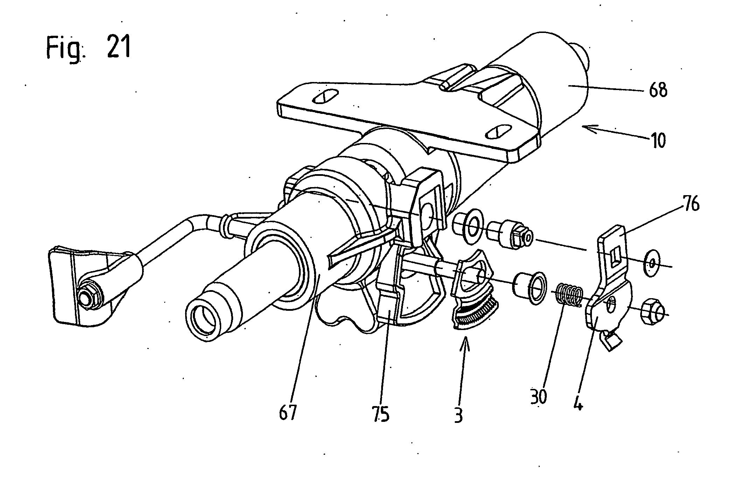

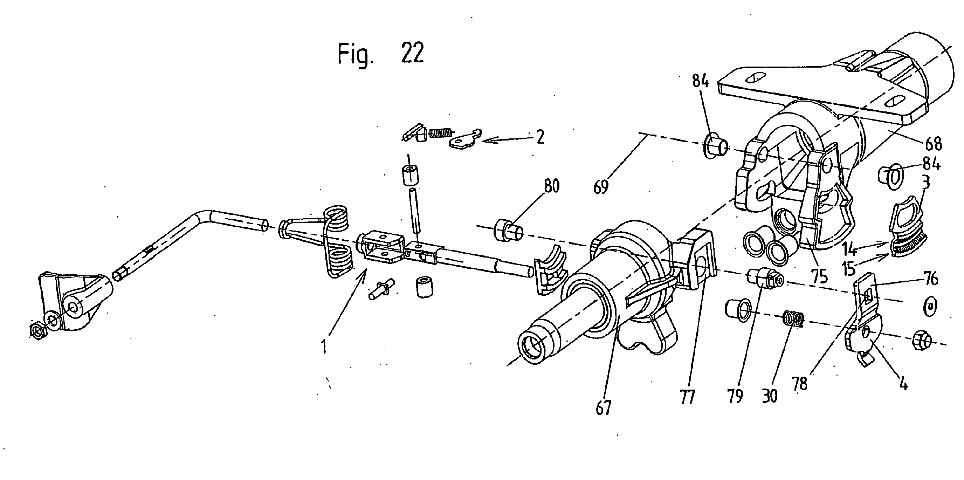

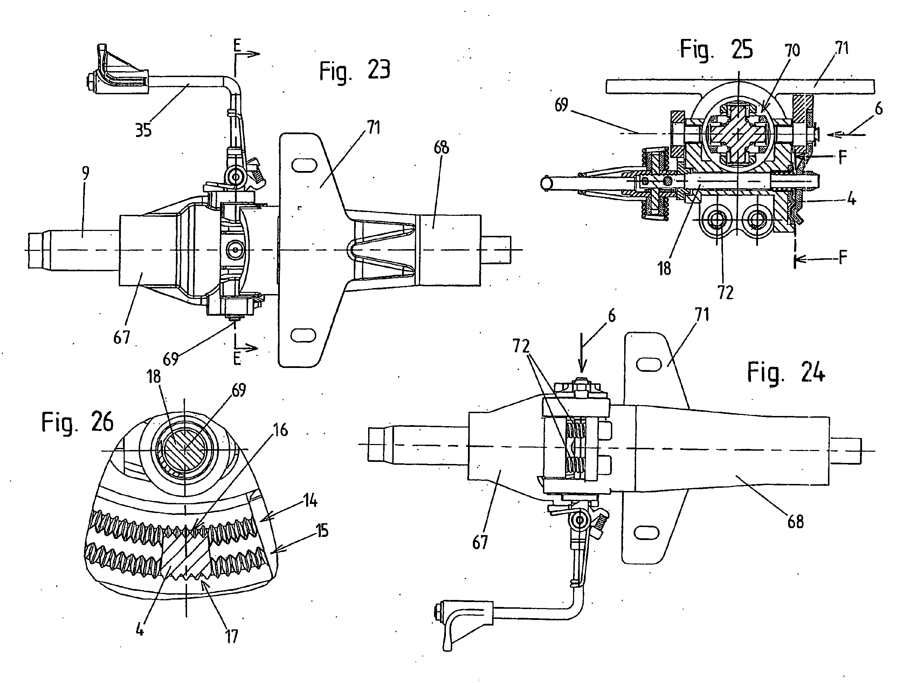

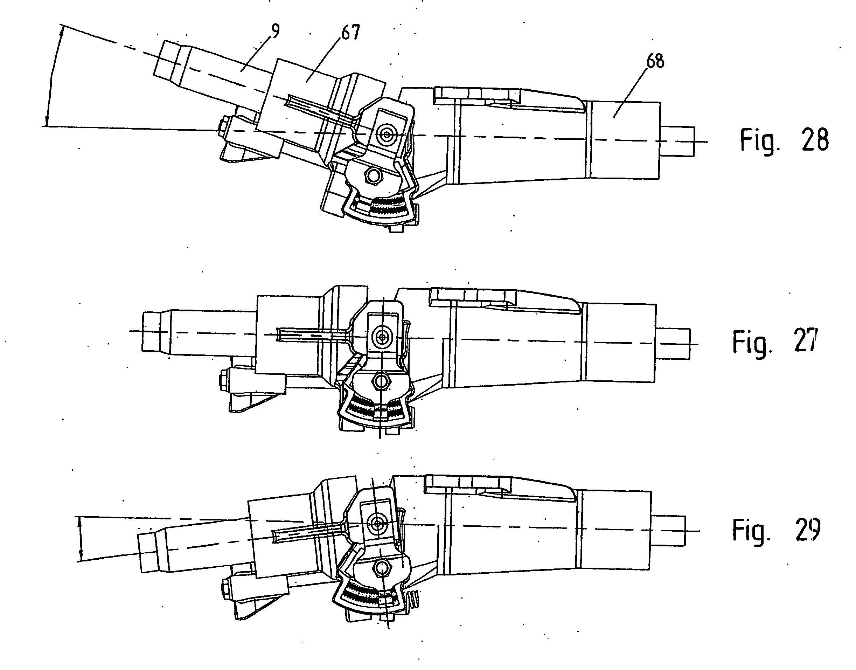

Beim Ausführungsbeispiel gemäß den Fig. 18 bis 29 ist die Lenksäule als Head-Tilt-Lenksäule ausgebildet und das Mantelrohr 10 wird hier von mehreren Rohrstücken gebildet, die als Abschnitte 67, 68 und 81 des Mantelrohrs bezeichnet werden. Das Mantelrohr 10 weist hierbei einen dem Lenkrad 66 benachbarten Abschnitt 67 und einen vom Lenkrad 66 weiter entfernt gelegenen Abschnitt 68 auf, wobei die Abschnitte 67, 68 um die Schwenkachse 69 gegeneinander verschwenkbar sind und jeweils einen Abschnitt der Lenkspindel 9 aufnehmen, welche im Bereich der Schwenkachse 69 über ein Kardangelenk 70 miteinander verbunden sind. Der Abschnitt 68 des Mantelrohrs 10 wird über einen Montageflansch 71 am Chassis des Fahrzeugs befestigt. Zwischen den Abschnitten 67, 68 des Mantelrohrs 10 sind unterhalb der Schwenkachse 69 Federn 72 (vgl. Fig. 24) angeordnet, welche im geöffneten Zustand der Spannvorrichtung den verschwenkbaren Abschnitt 67 des Mantelrohrs 10 in seine obere Endstellung entsprechend Fig. 28 verschwenken.

Die Spannvorrichtung ist in analoger Weise wie beim ersten Ausführungsbeispiel ausgebildet. Das Spannglied 1 mit dem Bedienarm 35, die Feder 37, der Spannbolzen 18 und das Blockierglied 2 sind hierbei identisch ausgebildet. Lediglich das Gegendruckteil 13 ist modifiziert und entlang eines Kreisbogens in einer Führungsvertiefung 73 im Abschnitt 68 des Mantelrohrs verschiebbar geführt (wobei es wiederum verdrehgesichert ist). Die Öffnung zum Durchtritt des Spannbolzens 18 und die Nase 52 sind wie zuvor beschrieben ausgebildet.

Das dem Endstück 19 gegenüberliegende Ende des Spannbolzens 18 zieht beim Schließen des Spanngliedes wiederum ein Gegenfeststellteil 4 gegen das Feststellteil 3. Das Feststellteil 3 wird von einem Einsatzteil in der Seitenwange 75 des chassisfesten Abschnitts 68 des Mantelrohrs 10 gebildet, wobei das Feststellteil 3 mit der Seitenwange 75 starr verbunden ist. Der Spannbolzen 18 durchsetzt das Feststellteil 4, die Seitenwange 75 und die gegenüberliegende Seitenwange 74 des chassisfesten Abschnitts 68 durch bogenförmige Ausnehmungen, so dass er bei der Höhenverstellung des Lenkrads 66 gegenüber diesen Teilen verschiebbar ist. Der Spannbolzen 18 durchsetzt weiters den Abschnitt 67 des Mantelrohrs durch eine Bohrung (vgl. Fig. 25) und bewegt sich bei der Verschwenkung des Abschnitts 67 mit diesem mit.

Das Gegenfeststellteil 4 wird in der Öffnungsstellung des Spannglieds 1 durch die Feder 30 vom Feststellteil 3 beabstandet. Das Gegenfeststellteil 4 wird bei diesem Ausführungsbeispiel bei einer Höhenverstellung der Lenkspindel gegenüber dem Feststellteil 3 entlang eines Kreisbogens verschoben, dessen Mittelpunkt die Schwenkachse 69 bildet, wobei die Verschieberichtung 5 zwischen dem Feststellteil 3 und dem Gegenfeststellteil 4 bei jeder Stellung des Gegenfeststellteils 4 gegenüber dem Feststellteil 3 die Tangente an diesen Kreisbogen darstellt. Hierbei sind die Verzahnungen 14 -17 des Feststellteils 3 und des Gegenfeststellteils 4 bogenförmig ausgebildet (wobei die Schwenkachse 69 den Mittelpunkt des Kreisbogens bildet). Im Übrigen können die Verzahnungen 14-17 prinzipiell analog wie im Zusammenhang mit dem ersten Ausführungsbeispiel beschrieben ausgebildet sein (vgl. insbesondere die Beschreibung zu den Fig. 12 bis 17). Es weisen hierbei sowohl das Feststellteil 3 als auch das Gegenfeststellteil 4 jeweils zwei Verzahnungen 14, 15 bzw. 16, 17 auf, wobei die Verzahnungen des Gegenfeststellteils im gezeigten Ausführungsbeispiel V-förmig nach außen und die des Feststellteils 3 V-förmig nach innen verlaufen und im gezeigten Ausführungsbeispiel die Zähne der Verzahnungen 16, 17 gegeneinander phasenverschoben sind (vgl. Fig. 26). Da bei einem Zusammenführen des Gegenfeststellteils 4 mit dem Feststellteil 3 bei verschiedene Verstellpositionen aufgrund dieser Ausbildung der Zähne eine gewisse Verschiebung des Gegenfeststellteils 4 gegenüber dem Feststellteil 3 in Richtung senkrecht zur Verschieberichtung 5 und zur Schließrichtung 6 erfolgt (wie beschrieben), ist das Gegenfeststellteil 4 begrenzt vertikal verschiebbar mit dem verschwenkbaren Abschnitt 67 des Mantelrohrs 10 verbunden. Es weist hierzu einen nach oben reichenden Fortsatz 76 auf, der in einer Vertiefung 77 des Abschnitts 67 in vertikaler Richtung verschiebbar geführt ist. Der Fortsatz 76 besitzt eine Ausnehmung 78, die als Langlochausnehmung ausgebildet ist und von einem Halteteil 79 durchsetzt wird, welches in eine Bohrung des Abschnitts 67 eingepresst ist und dadurch mit dem Abschnitt 67 starr verbunden ist. Ein Achszapfen des Halteteils 79 bildet zusammen mit einem von der gegenüberliegenden Seite in eine Bohrung des Abschnitts 67 eingepressten Achszapfen 80 ein Schwenklager für den Abschnitt 67 gegenüber dem Abschnitt 68, wobei der Achszapfen des Halteteils 79 und der Achszapfen 80 in Bohrungen im Abschnitt 68 ragen (unter Zwischenschaltung von Gleitlagerbuchsen 84).

Die Funktionsweise ist analog wie beim ersten Ausführungsbeispiel.

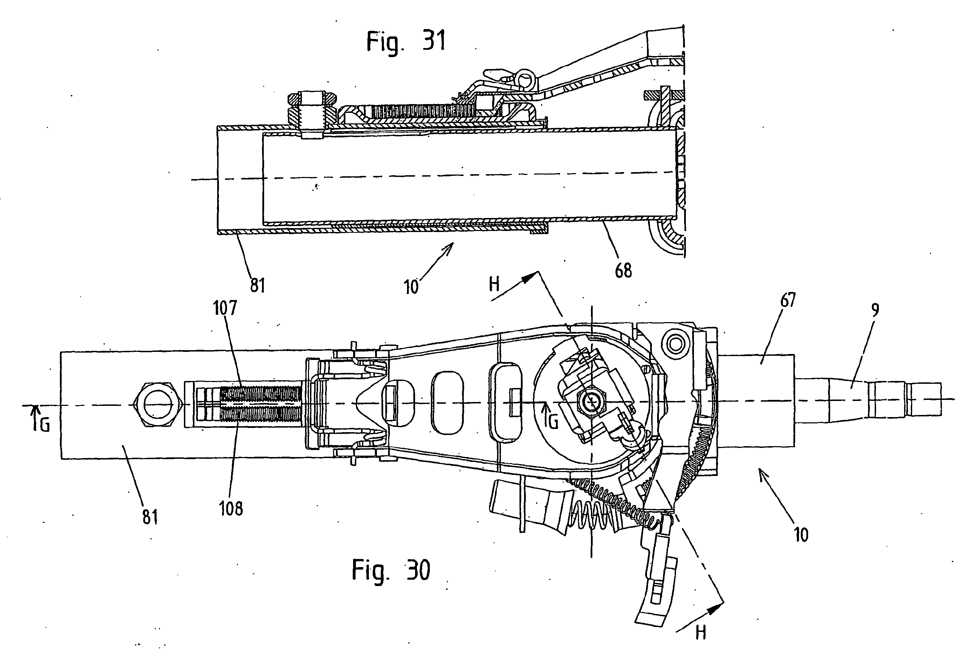

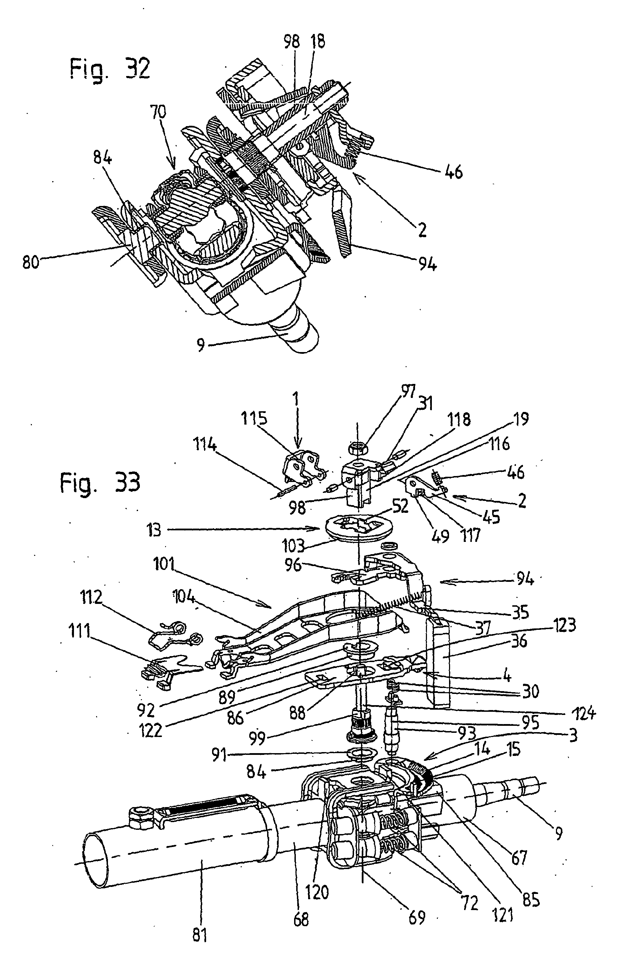

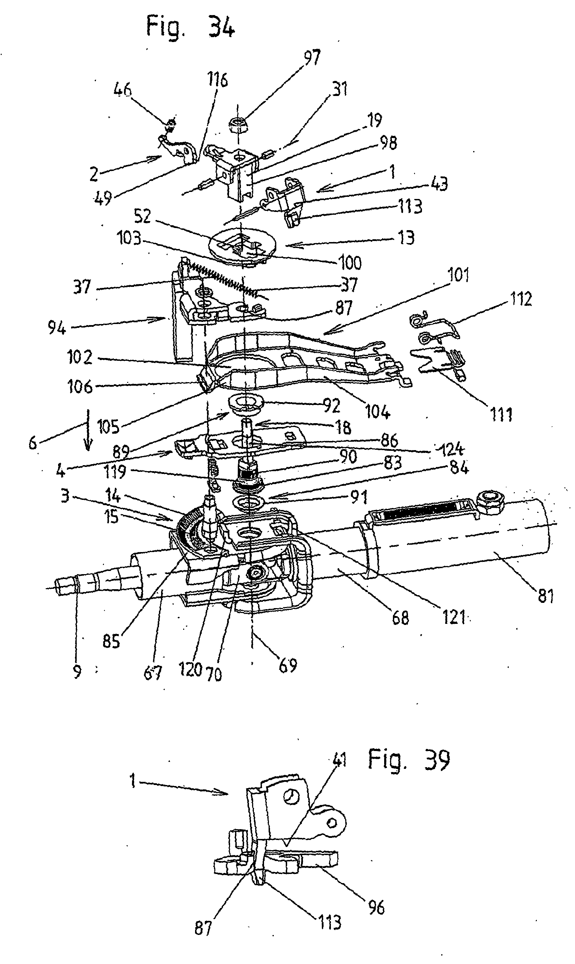

Ein weiteres Ausführungsbeispiel der Erfindung ist in den Fig. 30 bis 42 dargestellt. Die Lenksäule ist wiederum als "Head-Tilt-Lenksäule" ausgebildet mit einem dem Lenkrad benachbarten Abschnitt 67 des Mantelrohrs 10, der gegenüber einem weiter vom Lenkrad beabstandeten Abschnitt 68 verschwenkbar ist, wodurch die Höhenverstellung des Lenkrads erzielt wird. Der Abschnitt 68 ist hier begrenzt in achsialer Richtung in einem weiteren Abschnitt 81 verschiebbar gelagert, wodurch auch eine Längenverstellung der Lenksäule ermöglicht wird. Der Abschnitt 81 wird über nichtdargestellte Montageteile am Chassis des Fahrzeugs montiert und ist somit chassisfest. Zur Verschwenkung des Abschnitts 67 gegenüber dem Abschnitt 68 weisen diese beiden Abschnitte wiederum Verschwenkgabeln auf, die um die Schwenkachse 69 gegeneinander verschwenkbar sind. Zu diesem Zweck ist auf der einen Seite ein Achszapfen 80 vorgesehen, der in eine Bohrung in der Gabel des Abschnitts 68 eingepresst ist und in eine Bohrung in der Gabel des Abschnitts 67, unter Zwischenschaltung einer Gleitlagerbuchse 84 ragt (vgl. Fig. 32). Auf der anderen Seite ist eine Rändel 83 des - in diesem Fall achsial unverschiebbaren - Spannbolzens 18 in die Gabel des verschwenkbaren Abschnitts 67 eingepresst und ein an die Rändel 83 anschließender Abschnitt 119 des Spannbolzens ragt durch eine Bohrung in der Gabel des Abschnitts 68, und der Zwischenschaltung einer Gleitlagerbuchse 84 (Fig. 32, 34).

Der Übersichtlichkeit halber ist nur der an das Lenkrad anschließende Abschnitt der Lenkspindel 9 dargestellt.

Das Feststellteil 3 ist an einer Seitenwange 85 des verschwenkbaren Abschnitts 67 angebracht und weist wiederum Verzahnungen 14, 15 mit einem bogenförmigen Verlauf auf. Das Gegenfeststellteil 4 besitzt einen Armfortsatz 86 mit Führungslöchern 122, 123, welche mit Spiel Nasen 120, 121 an der Außenseite der Gabel des Abschnitts 68 aufnehmen, wodurch der Armfortsatz 86 gegen eine Verschwenkung um die Schwenkachse 69 gesichert ist. Das Gegenfeststellteil 4 besitzt aber ein gewisses Spiel für eine Einstellung seiner Position in achsialer Richtung des Abschnitts 68. Hierzu ist die Bohrung 88 im Armfortsatz 86 größer als der Außendurchmesser der die Bohrung 88 durchsetzenden Buchse 89, welche auf dem Rändel 90 des Spannbolzens 18 sitzt. Die Gleitlagerbuchse 84 und die Buchse 89 weisen jeweils einen Bund 91, 92 auf, zwischen denen der Armfortsatz 86 des Gegenfeststellteils 4 liegt, wobei er in achsialer Richtung des Spannbolzens 18 im Bereich zwischen Bunden 91, 92 verschiebbar ist. Es ist dadurch das Gegenfeststellteil 4 zwischen seiner an den Verzahnungen 14, 15 des Feststellteils 3 mit seinen Verzahnungen 16, 17 in eingriffstehenden Position und seiner vom Feststellteil 3 abgehobenen Position in achsialer Richtung des Spannbolzens 18, welche wiederum die Schließrichtung 6 bildet, verstellbar.

Zwischen dem Feststellteil 3 und dem Gegenfeststellteil 4 angeordnete Federn 30 bewirken wiederum die Beabstandung dieser Teile im geöffneten Zustand der Spannvorrichtung.

Im verschwenkbaren Abschnitt 67 des Mantelrohrs 10 ist weiters ein Achsbolzen 93 festgelegt, der durch Bohrungen eines Bedienhebels 94 ragt und den Bedienhebel um die Schwenkachse 95 verschwenkbar lagert. Der Bedienhebel weist wiederum einen Bedienarm 35 mit einem Bediengriff 36 auf. Weiters besitzt der Bedienhebel 94 einen Hebelarm 96, der mit dem Spannglied 1 zusammenwirkt.

Das Spannglied 1 ist verschwenkbar um die Achse 31 an einem Endstück 19 des Spannbolzens 18 gelagert. Der Spannbolzen 18 ist hierbei bei diesem Ausführungsbeispiel nicht einteilig ausgebildet, sondern umfasst ein Hauptteil 124 und das auf das Hauptteil 124 aufgesteckte und mittels einer Mutter97 befestigte Endstück 19. Zur Verdrehsicherung des Endstücks 19 gegenüber dem Spannbolzen dienen Fortsätze 98, die an Abflachungen 99 des Spannbolzens 18 anliegen. Mit der Mutter 97 kann die insgesamte Länge des Spannbolzens 18 (Hauptteil 124 plus Endstück 19) so eingestellt werden, dass in der Schließstellung des Spannglieds 1 gerade kein Spiel zwischen Verzahnungen 14-17 und 107 - 110 (die unten beschrieben sind) vorliegt.

Um die Achse 31 ist weiters das Blockierglied 2 verschwenkbar gelagert, wobei es durch eine zwischen seinem Fortsatz 45 und dem Endstück 19 angeordnete Feder 46 in Richtung seiner Blockierstellung beaufschlagt ist.

Das Endstück 98 durchsetzt eine Ausnehmung 100 im Gegendruckteil 13. Dieses liegt seinerseits an einem Andruckhebel 101 an, der eine kreisförmige Ausnehmung 102 besitzt, in welche ein kreisförmiger Fortsatz 103 des Gegendruckteils 13 mit geringem Spiel ragt.

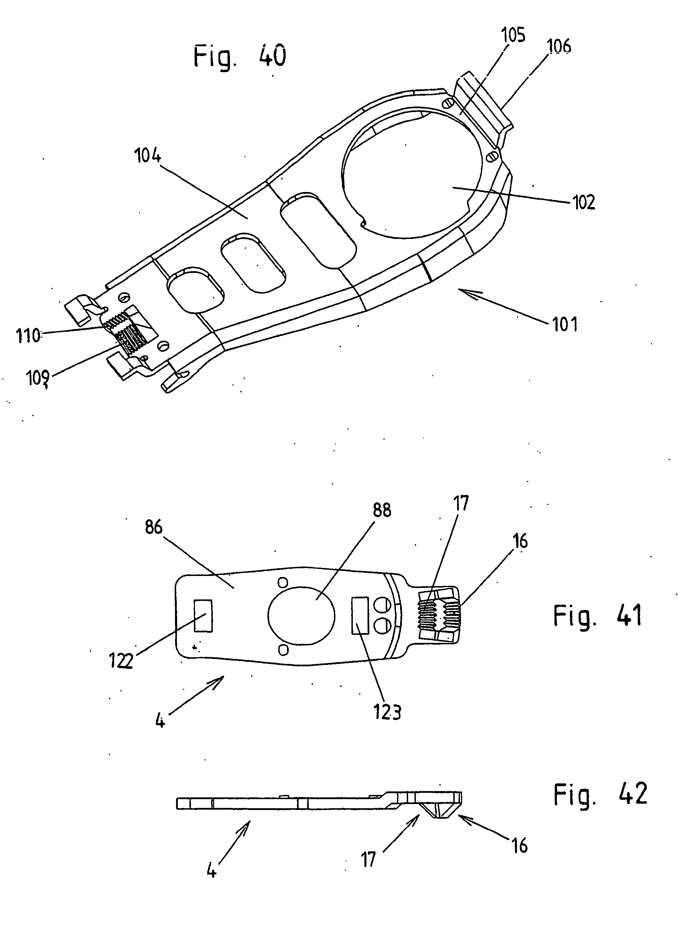

Der Andruckhebel 101 besitzt einen längeren Hebelarm 104 und einen kürzeren Hebelarm 105 mit Sütztfuß106, der im geschlossenen Zustand der Spannvorrichtung das Gegenfeststellteil 4 gegen das Feststellteil 3 drückt. Im Bereich des freien Endes des Andruckhebels 101 sind Verzahnungen 109, 110 angeordnet (Fig. 40), welche mit Verzahnungen 107, 108 (Fig. 30) am chassisfesten Abschnitt 81 des Mantelrohrs zur Verriegelung der Längsverstellung der Lenksäule zusammenwirken. Die Verzahnungen 107-110 erstrecken sich in achsialer Richtung des Abschnitts 81 des Mantelrohrs mit senkrecht zu dieser achsialen Richtung sich erstreckenden Zähnen, wobei die Zähne der Verzahnungen 107 und 108 bzw. 109 und 110 V-förmig zueinander angeordnet sind. Die Verzahnungen 107 - 110 sind in analoger Weise wie die im Zusammenhang mit dem ersten Ausführungsbeispiel beschriebenen Verzahnungen 14 -17 ausgebildet und die Funktionsweise ist gleich. Es ist dadurch eine stufenlose Längs-Verstellung möglich. Auch andere Ausbildungen von Verzahnungen am Hebelarm 104 und am Abschnitt 81 sind denkbar und möglich.

Auf das Ende des Hebelarms 104 ist ein Gleitschuh 111 aufgebracht. Eine Feder 112 dient zur Beabstandung der Verzahnungen 109, 110 von den Verzahnungen 107, 108 im geöffneten Zustand der Spannvorrichtung. Der Bedienhebel 94 wird von der Feder 37 in die geschlossene Stellung der Spannvorrichtung beaufschlagt. Bei einer Verschwenkung des Bedienhebels 94 um die Schwenkachse 95 wird das Spannglied 1 ebenfalls verschwenkt. Zu diesem Zweck ragt ein Eingriffsfortsatz 113 des Spannglieds 1 in einen Schlitz 87 (vgl. Fig. 34) im Hebelarm 96, wie dies insbesondere aus Fig. 39 ersichtlich ist. Es kann dadurch mittels des Bedienhebels 94 das Spannglied 1 zwischen seiner Schließstellung und seiner Öffnungsstellung verschwenkt werden. Der Stift 114 des Spannglieds 1 begrenzt die weitere Verschwenkung des Spannglieds 1 durch die Kraft der Feder 37, wenn sich dieses in der Schließstellung befindet.

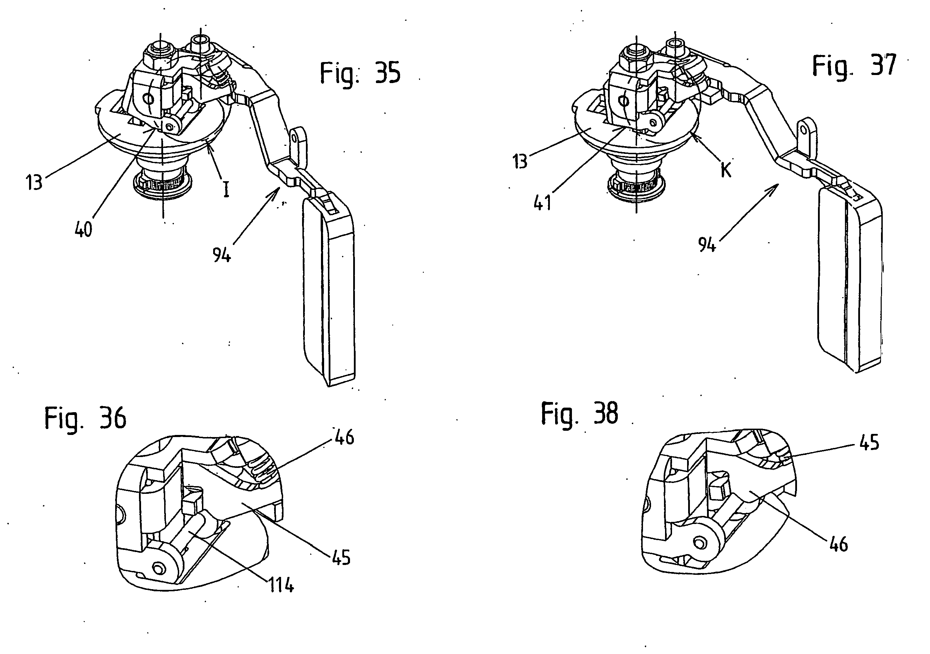

in der Schließstellung drückt die Andruckfläche 40 des Spannglieds 1 gegen die dem Spannglied 1 zugewandte Oberfläche des Gegendrucksteils 13 (Fig. 35). Das Gegendruckteil 13 drückt dadurch den Andruckhebel 101 in Richtung zum Mantelrohr, wodurch einerseits die Verzahnungen 107 - 110 gegen die Kraft der Feder 112 in Eingriff gebracht sind, andererseits der Stützfuß 106 des Andruckhebels 101 das.Gegenfeststellteil 4 gegen das Feststellteil 3 drückt, so dass die Verzahnungen 14 -17 in Eingriff gebracht sind.

Die Verschwenkung des in seiner Blockierstellung sich befindenden Blockierglieds 2 durch die Kraft der Feder 46 wird durch den Anschlagsteg 117 des Blockiergliedes 2 begrenzt, der an den Rand 118 des Endstücks 19 anschlägt.

Bei einer Verschwenkung des Spannglieds 1 in Richtung seiner Öffnungsstellung hebt sich die Andruckfläche 40 vom Gegendruckteil 13 ab. Eine Verschiebung desselben durch die Kraft der Federn 30, 112 wird aber durch das sich in seiner Blockierstellung befindende Blockierglied 2 verhindert, dessen Nase 49 an der Nase 52 des Gegendruckteils 13 anliegt (die stirnseitige Anlagefläche an der Nase 49 des Blockierglieds liegt an der stirnseitigen Gegenanlagefläche der Nase 52 des Gegendruckteils an).

Das Blockierglied 2 bleibt bei der Verschwenkung des Spannglieds 1 zunächst in seiner Blockierstellung. Es kommt schließlich zum Anschlag der den Anschlag 43 bildenden Wand des Spannglieds 1 am Blockierglied 2 (an dessen Rand 116), wodurch bei einer weiteren Verschwenkung des Spannglieds 1 das Blockierglied 2 verschwenkt wird, bis der Rand der Nase 49 den Rand der Nase 52 erreicht hat, worauf die Freigabestellung des Blockierglieds 2 erreicht wird. In der Folge kann das Gegendruckteil 13 sich in die vom Mantelrohr 10 abgewandte Richtung verschieben (entgegen der Schließrichtung 6), bis es an der Andruckfläche 41 des Spannglieds 1 anliegt (Fig. 37). Mit dem Gegendruckteil 13 kommt es auch zu einer Verschiebung des Andruckhebels 101 und des Gegenfeststellteils 4. Die Verzahnungen 14 -17 der Höhenverstellung und 107 -110 der Längsverstellung werden dabei durch die Kraft der Federn 30, 112 außer Eingriff gebracht.

Im geöffneten Zustand der Spannvorrichtung wird der Abschnitt 67 des Mantelrohrs 10 durch die Federn 72 nach oben geschwenkt. Bei der Verschwenkung des Abschnitts 67 verschwenkt sich der Spannbolzen 18 mit und mit diesem das Endstück 19 mit den an ihm gelagerten Spannglied 1 und Blockierglied 2 sowie das Gegendruckteil 13.

Unterschiedliche Modifikationen der beschriebenen Ausführungsbeispiele sind denkbar und möglich. So wäre beispielsweise anstelle einer verschwenkbaren Lagerung des Blockiergliedes auch eine verschiebbare Lagerung desselben möglich. Prinzipiell wäre es auch denkbar und möglich, das Spannglied ebenfalls nicht verschwenkbar sondern verschiebbar zu lagern, wobei die mit einem entsprechend ausgebildeten Gegendruckteil zusammenwirkende Andruckfläche einen keilförmigen Verlauf aufweisen könnte. Das Spannglied könnte hierbei unmittelbar betätigbar sein oder durch einen mit dem Spannglied zusammenwirkenden Bedienhebel.

Die Spannvorrichtung könnte auch ein um die Achse des Spannbolzens mittels eines Bedienarms verdrehbares Armglied aufweisen. Das Blockierglied wäre dann zur Verstellung zwischen seiner Blockierstellung und seiner Freigabestellung ebenfalls um die Achse des Spannbolzens verschwenkbar. In der Blockierstellung würde es hierbei eine Abhebung des Gegenfeststellteils vom Feststellteil blockieren (beispielsweise durch Anlage einer Nase an einem Gegendruckteil). Es müsste wiederum eine Kopplung zwischen dem Spannglied und dem Blockierglied vorhanden sein, durch welche bei einer Verstellung des Spanngliedes von seiner Schließstellung in seine Öffnungsstellung das Blockierglied nach einem Teil des Verstellweges des Spannglieds in seine Freigabestellung mitgenommen wird (und umgekehrt beim Schließvorgang der Feststelleinrichtung).

### Legende zu den Hinweisziffern:

- 1: Spannglied
- 2: Blockierglied
- 3: Feststellteil
- 4: Gegenfeststellteil
- 5: Verschieberichtung
- 6: Schließrichtung
- 7: Richtung der Höhenverstellung
- 8: Richtung der Längenverstellung
- 9: Lenkspindel
- 10: Mantelrohr
- 11: Konsoleneinheit
- 12: Seitenwange
- 13: Gegendruckteil
- 14: Verzahnung
- 15: Verzahnung
- 16: Verzahnung
- 17: Verzahnung
- 18: Spannbolzen
- 19: Endstück
- 20: Öffnung
- 21: Öffnung
- 22: Langlochausnehmung
- 23: Mutter
- 24: Beilagscheibe
- 25: Bohrung
- 26: Grundkörper
- 27: Zahnleiste
- 28: Führungssteg
- 29: Nase
- 30: Feder
- 31: Achse
- 32: Achsstift
- 33: Bohrung
- 34: Gabelfortsatz
- 35: Bedienarm
- 36: Bediengriff
- 37: Feder
- 38: Stift
- 39: Rolle
- 40: Andruckfläche
- 41: Andruckfläche
- 42: Nase
- 43: Anschlag
- 44: Bohrung
- 45: Fortsatz
- 46: Feder
- 47: Federtopf
- 48: Stift
- 49: Nase des Blockierglieds
- 50: Anlagefläche
- 51: Gegenanlagefläche
- 52: Nase des Gegendruckteils
- 53: Stufe
- 54: Stufe
- 55: Anschlagplättchen
- 57: Zahn
- 59: Zahn
- 61: Ebene
- 63: Ebene
- 65: Schwenkachse
- 67: verschwenkbarer Abschnitt
- 69: Schwenkachse
- 71: Montageflansch
- 73: Führungsvertiefung
- 75: Seitenwange
- 77: Vertiefung
- 79: Halteteil
- 81: Abschnitt
- 83: Rändel
- 85: Seitenwange
- 87: Schlitz
- 89: Buchse
- 91: Bund
- 93: Achsbolzen
- 95: Schwenkachse
- 97: Mutter
- 99: Abflachung
- 101: Andruckhebel
- 103: Fortsatz
- 105: Hebelarm
- 107: Verzahnung
- 109: Verzahnung
- 111: Gleitschuh
- 113: Eingriffsfortsatz
- 115: Gegenanschlag
- 117: Anschlagsteg
- 119: Abschnitt
- 121: Nase
- 123: Führungsloch
- 56: Zahn
- 58: Zahn
- 60: Ebene
- 62: Ebene
- 64: Winkel
- 66: Lenkrad
- 68: Abschnitt
- 70: Kardangelenk
- 72: Feder
- 74: Seitenwange
- 76: Fortsatz
- 78: Ausnehmung
- 80: Achszapfen
- 82: Gleitlagerteil
- 84: Gleitlagerbuchse
- 86: Armfortsatz
- 88: Bohrung
- 90: Rändel
- 92: Bund
- 94: Bedienhebel
- 96: Hebelarm
- 98: Fortsatz
- 100: Ausnehmung
- 102: Ausnehmung
- 104: Hebelarm
- 106: Stützfuß
- 108: Verzahnung
- 110: Verzahnung
- 112: Feder
- 114: Stift
- 116: Rand
- 118: Rand.
- 120: Nase
- 122: Führungsloch
- 124: Hauptteil

## Patentansprüche

1. Feststelleinrichtung einer zumindest höhenverstellbaren Lenksäule, mit einer öffen- und schließbaren Spannvorrichtung, die ein über einen Verstellweg zwischen einer Öffnungsstellung und einer Schließstellung verstellbares Spannglied (1) aufweist, in dessen Öffnungsstellung Verzahnungen (14, 15; 16, 17) mindestens eines Feststellteils (3) und mindestens eines Gegenfeststellteils (4) voneinander beabstandet sind und die Höhenverstellung freigegeben ist und bei dessen Verstellung von seiner Öffnungsstellung in seine Schließstellung sich die Verzahnungen (14, 15; 16, 17) gegen die Kraft von mindestens einer zwischen dem Feststellteil (3) und dem Gegenfeststellteil (4) wirkenden Feder (30) in eine Schließrichtung (6) aufeinander zu bewegen und miteinander in Eingriff gelangen, wobei die Spannvorrichtung weiters mindestens ein Blockierglied (2) aufweist, welches eine Blockierstellung, in der es eine Abhebung des Gegenfeststellteils (4) vom Feststellteil (3) blockiert und die Verzahnungen (14, 15; 16, 17) in Eingriff hält, und eine Freigabestellung aufweist, in der das Gegenfeststellteil (4) vom Feststellteil (3) abhebbar ist und die Verzahnungen (14, 15; 16, 17) außer Eingriff bringbar sind, **dadurch gekennzeichnet, dass** eine Kopplung zwischen dem Spannglied (1) und dem Blockierglied (2) vorliegt, wobei sich das Blockierglied (2) bei einer Verstellung des Spannglieds (1) ausgehend von der Schließstellung des Spanngliedes in Richtung der Öffnungsstellung des Spanngliedes über einen ersten Teil (d) des Verstellweges des Spannglieds (1) in der Blockierstellung befindet und bei einer weiteren Verstellung des Spanngliedes (1) in Richtung seiner Öffnungsstellung eine Verstellung des Blockiergliedes (2) in seine Freigabestellung erfolgt, wobei vom Blockierglied (2) die Freigabestellung erst eingenommen wird, wenn das Spannglied (1) die Abhebung des Gegenfeststellteils (4) vom Feststellteil (3) durch die Kraft der mindestens einen Feder (30) bereits soweit freigibt, dass deren Verzahnungen (14, 15; 16, 17) außer Eingriff gelangen.

2. Feststelleinrichtung nach Anspruch 1, **dadurch gekennzeichnet, dass** dieser erste Teil (d) des Verstellweges ausgehend von der Schließstellung in Richtung der Öffnungsstellung den Großteil des gesamten Verstellweges (e) zwischen der Schließstellung und der Öffnungsstellung ausmacht, vorzugsweise mehr als drei Viertel des gesamten Verstellweges beträgt.

3. Feststelleinrichtung nach Anspruch 1 und Anspruch 2, **dadurch gekennzeichnet, dass** der Übergang zwischen der Blockierstellung und der Freigabestellung des Blockierglieds (2) abrupt ist.

4. Feststelleinrichtung nach einem der Ansprüche 1 bis 3, **dadurch gekennzeichnet, dass** sich das Blockierglied (2) bei einer Verstellung des Spanngliedes (1) ausgehend von seiner Öffnungsstellung in Richtung seiner Schließstellung über einen ersten Teil (f) des Verstellweges des Spannglieds (1) in Schließrichtung in seiner Freigabestellung befindet und erst bei einer weiteren Verstellung des Spanngliedes in Schließrichtung eine Verstellung des Blockiergliedes (2) in seine Blockierstellung erfolgt.

5. Feststelleinrichtung nach Anspruch 4, **dadurch gekennzeichnet, dass** dieser erste Teil (f) des Verstellweges in Schließrichtung den Großteil des gesamten Verstellweges (e) ausmacht, vorzugsweise mehr als drei Viertel des gesamten Verstellweges beträgt.

6. Feststelleinrichtung nach einem der Ansprüche 1 bis 5, **dadurch gekennzeichnet, dass** das Blockierglied (2) von mindestens einer Feder (46) in Richtung seiner Blockierstellung beaufschlagt wird.

7. Feststelleinrichtung nach einem der Ansprüche 1 bis 6, **dadurch gekennzeichnet, dass** das Spannglied (1) zur Verstellung zwischen seiner Schließstellung und seiner Öffnungsstellung über einen den Verstellweg bildenden Schwenkbereich um eine Achse (31) verschwenkbar gelagert ist.

8. Feststelleinrichtung nach Anspruch 7, **dadurch gekennzeichnet, dass** die Achse (31) senkrecht zur Schließrichtung (6) steht.

9. Feststelleinrichtung nach einem der Ansprüche 1 bis 8, **dadurch gekennzeichnet, dass** das Blockierglied (2) zur Verstellung zwischen seiner Blockierstellung und seiner Freigabestellung verschwenkbar gelagert ist.

10. Feststelleinrichtung nach Anspruch 9, **dadurch gekennzeichnet, dass** das Blockierglied (2) um die gleiche Achse (31) wie das Spannglied (1) verschwenkbar gelagert ist.

11. Feststelleinrichtung nach einem der Ansprüche 1 bis 10, **dadurch gekennzeichnet, dass** das Blockierglied (2) eine Anlagefläche (50) aufweist, die in der Blockierstellung zur Blockierung der Abhebung des Gegenfeststellteils (4) vom Feststellteil (3) an einer Gegenanlagefläche (51) des Gegenfeststellteils oder eines Gegendruckteils (13) anlegbar ist.

12. Feststelleinrichtung nach Anspruch 11, **dadurch gekennzeichnet, dass** die Anlagefläche (50) und die Gegenanlagefläche (51) an Stufen enden und bei einer Verstellung des Blockierglieds (2) in seine Freigabestellung eine Überführung der Stufe der Anlagerfläche (50) über die Stufe der Gegenanlagefläche (51) erfolgt.

13. Feststelleinrichtung nach Anspruch 11 oder Anspruch 12, **dadurch gekennzeichnet, dass** die Anlagefläche (50) an der Stirnseite mindestens einer Nase (49) des Blockierglieds (2) angeordnet ist.

14. Feststelleinrichtung nach einem der Ansprüche 11 bis 13, **dadurch gekennzeichnet, dass** die Gegenanlagefläche (51) an der Stirnseite mindestens einer Nase (52) des Gegenfeststellteils (4) oder des Gegendruckteils (13) angeordnet ist.

15. Feststelleinrichtung nach einem der Ansprüche 1 bis 14, **dadurch gekennzeichnet, dass** das Spannglied (1) zur Kopplung zwischen dem Spannglied (1) und dem Blockierglied (2) einen Anschlag (43) aufweist, der bei der Verstellung des Spannglieds (1) ausgehend von seiner Schließstellung in Richtung seiner Öffnungsstellung im Laufe des ersten Teils (d) des Verstellweges an einen Gegenanschlag (115) des Blockierglieds (2) anschlägt und in der Folge das Blockierglied (2) mitnimmt.

16. Feststelleinrichtung nach einem der Ansprüche 1 bis 15, **dadurch gekennzeichnet, dass** zur Verschwenkung des Spanngliedes (1) zwischen seiner Schließstellung und seiner Öffnungsstellung ein Bedienarm (35) vorgesehen ist, der am Spannglied (1) angeordnet ist oder mit diesem in Verbindung steht.

17. Feststelleinrichtung nach Anspruch 16, **dadurch gekennzeichnet, dass** der Bedienarm (35) von einer Feder (37) in die Schwenkstellung beaufschlagt wird, in der das Spannglied (1) sich in seiner Schließstellung befindet.

18. Feststelleinrichtung nach einem der Ansprüche 1 bis 17, **dadurch gekennzeichnet, dass** das Spannglied (1) an einem Spannbolzen (18) verschwenkbar gelagert ist.

19. Feststelleinrichtung nach Anspruch 18, **dadurch gekennzeichnet, dass** der Spannbolzen (18) in Schließrichtung (6) des Gegenfeststellteils (4) verschiebbar ist und am Gegenfeststellteil (4) zur Verschiebung desselben in Richtung zum Feststellteil (3) angreift, und dass das Spannglied (1) in seiner Schließstellung mit einer Andruckfläche (40) an einem in Schließrichtung unverschiebbaren Gegendruckteil (13) anliegt.

20. Feststelleinrichtung nach Anspruch 18, **dadurch gekennzeichnet, dass** der Spannbolzen (18) in Schließrichtung (6) unverschiebbar gelagert ist und das Spannglied (1) in seiner Schließstellung mit einer Andruckfläche (40) an einem in Schließrichtung (6) verschiebbaren Gegendruckteil (13) anliegt, wobei das Gegendruckteil (13) das Gegenfeststellteil (4) gegen das Feststellteil (3) drückt, direkt oder unter Zwischenschaltung von weiteren in Schließrichtung (6) verschiebbaren Teilen (101) (Fig. 30-42).

21. Feststelleinrichtung nach einem der Ansprüche 18 bis 20, **dadurch gekennzeichnet, dass** das Blockierglied (2) am Spannbolzen (18) verschwenkbar gelagert ist.

22. Feststelleinrichtung nach Anspruch 21, **dadurch gekennzeichnet, dass** das Blockierglied (2) mit dem gleichen Gegendruckteil (13) wie das Spannglied (1) zusammenwirkt.

23. Feststelleinrichtung nach eine der Ansprüche 17, 20 oder 21, **dadurch gekennzeichnet, dass** das Gegendruckteil (13) an einer in Schließrichtung (6) unverschiebbaren Seitenwange (12) in Verschieberichtung (5) zwischen dem Feststellteil (3) und Gegenfeststellteil (4) verschiebbar gelagert ist und der Spannbolzen (18) eine Öffnung in der Seitenwange (12) durchsetzt und in dieser Öffnung (20) gegenüber der Seitenwange (12) in Verschieberichtung (5) verschiebbar ist.

24. Feststelleinrichtung nach. Anspruch 23, **dadurch gekennzeichnet, dass** das Feststellteil (3) von einer gegenüberliegenden in Schließrichtung (6) unverschiebbaren Seitenwange gebildet wird, welche der Spannbolzen (18) ebenfalls durch eine Öffnung (21) durchsetzt, wobei er in die Verschieberichtung (5) zwischen dem Feststellteil (3) und Gegenfeststellteil (4) gegenüber der Seitenwange verschiebbar ist.

25. Feststelleinrichtung nach einem der Ansprüche 20 bis 22, **dadurch gekennzeichnet, dass** das Gegenfeststellteil (4) vom Spannbolzen (18) durch eine Bohrung (88) durchsetzt wird und auf diesem in Schließrichtung (6) verschiebbar gelagert ist (Fig. 30 - 42).

26. Feststelleinrichtung nach Anspruch 25, **dadurch gekennzeichnet, dass** weiters ein Andruckhebel (101) auf dem Spannbolzen (18) in Schließrichtung (6) verschiebbar gelagert ist, wobei Verzahnungen (109, 110; 107, 108) am Andruckhebel (101) und an einem chassisfesten Abschnitt (81) des Mantelrohrs (10) in der Schließstellung des Spannglieds (1) miteinander in Eingriff stehen und diese Verzahnungen in der Öffnungsstellung des Spannglieds (1) voneinander beabstandet sind, wobei eine Längenversteiiung der Lenksäule freigegeben ist.

27. Feststelleinrichtung nach einem der Ansprüche 1 bis 26, **dadurch gekennzeichnet, dass** das die Lenkspindel (9) lagernde Mantelrohr (10) einen dem Lenkrad (66) benachbarten Abschnitt (67) aufweist, der gegenüber einem weiter vom Lenkrad (66) entfernt gelegenen Abschnitt (68) zur Höhenverstellung der Lenksäule verschwenkbar ist.

28. Feststelleinrichtung nach Anspruch 27, **dadurch gekennzeichnet, dass** der weiter vom Lenkrad (66) entfernt gelegene Abschnitt (68) in einem noch weiter vom Lenkrad (66) entfernt gelegenen Abschnitt (81) des Mantelrohrs (10) in Längsrichtung des Abschnitts (81) verschiebbar gelagert ist.

29. Feststelleinrichtung nach einem der Ansprüche 1 bis 28, **dadurch gekennzeichnet, dass** die Zähne (56 - 59) der Verzahnungen (14-17) sich senkrecht zur Verschieberichtung (5) zwischen dem Feststellteil (3) und Gegenfeststellteil (4) erstrecken und aufeinanderfolgende Zähne (56 - 59) der Verzahnungen (14-17) jeweils gleiche Abstände voneinander aufweisen und die Spitzen der Zähne (56 - 59) der Verzahnungen (14 -17) jeweils in einer Ebene (60-63) liegen, wobei die Ebenen (60, 61) der Verzahnungen (14, 15) sowie die Ebenen (62, 63) der Zähne (58, 59) der Verzahnungen (16, 17) V-förmig zueinander stehen und hierbei gleiche Winkel einschließen und wobei zwischen den Zähnen (56, 57) der Verzahnungen (14, 15) des Feststellteils oder zwischen den Zähnen (58, 59) der Verzahnungen (16, 17) des Gegenfeststellteils in Verschieberichtung (5) ein Versatz (v) vorliegt, der einen Teil des Abstands (a) zwischen aufeinanderfolgenden Zähnen (56-59) beträgt.

30. Feststelleinrichtung nach Anspruch 29, **dadurch gekennzeichnet, dass** der Versatz (v) die Hälfte des Abstands (a) zwischen aufeinanderfolgenden Zähnen (56 - 59) beträgt.

## Claims

1. A fixing device for an at least height-adjustable steering column, with an openable and closable clamping device which has a clamping member (1) which is displaceable along a displacement path between an open position and a closed position and, in the open position of the clamping member (1), toothings (14, 15; 16, 17) of at least one fixing part (3) and at least one counterfixing part (4) are spaced apart and the height adjustment is enabled and, during the displacement of the clamping member (1) from its open position into its closed position, the toothings (14, 15; 16, 17) move towards one another in a closing direction (6) against the force of at least one spring (30) acting between the fixing part (3) and the counterfixing part (4) and come into engagement with each other, wherein the clamping device also has at least one blocking member (2) which has a blocking position, in which it blocks the lifting of the counterfixing part (4) from the fixing part (3) and holds the toothings (14, 15; 16, 17) in engagement, and a release position in which the counterfixing part (4) is liftable from the fixing part (3) and the toothings (14, 15; 16, 17) are disengageable, **characterised in that** a coupling is provided between the clamping member (1) and the blocking member (2), wherein the blocking member (2) is in its blocking position during displacement of the clamping member (1) from the closed position of the clamping member towards the open position of the clamping member over a first part (d) of the displacement path of the clamping member (1) and, during further displacement of the clamping member (1) towards its open position, the blocking member (2) is displaced into its release position, wherein the release position is adopted by the blocking member (2) only when the clamping member (1) has already enabled the lifting of the counterfixing part (4) from the fixing part (3) by the force of the at least one spring (30) in so far as their toothings (14, 15; 16, 17) disengage.

2. A fixing device according to claim 1, **characterised in that** this first part (d) of the displacement path from the closed position towards the open position makes up the majority of the total displacement path (e) between the closed position and the open position, preferably more than three quarters of the total displacement path.

3. A fixing device according to claim 1 and claim 2, **characterised in that** the transition between the blocking position and the release position of the blocking member (2) is abrupt.

4. A fixing device according to any one of claims 1 to 3, **characterised in that** the blocking member (2) is in its release position during displacement of the clamping member (1) from its open position towards its closed position over a first part (f) of the displacement path of the clamping member (1) in the closing direction, and the blocking member (2) is displaced into its blocking position only when the clamping member is displaced further in the closing direction.

5. A fixing device according to claim 4, **characterised in that** this first part (f) of the displacement path in the closing direction makes up the majority of the total displacement path (e), preferably more than three quarters of the total displacement path.

6. A fixing device according to any one of claims 1 to 5, **characterised in that** the blocking member (2) is acted upon in the direction of its blocking position by at least one spring (46).

7. A fixing device according to any one of claims 1 to 6, **characterised in that** the clamping member (1), for displacement between its closed position and its open position, is mounted so as to be pivotable about an axis (31) over a pivoting range forming the displacement path.

8. A fixing device according to claim 7, **characterised in that** the axis (31) extends perpendicularly to the closing direction (6).

9. A fixing device according to any one of claims 1 to 8, **characterised in that** the blocking member (2) is pivotably mounted for displacement between its blocking position and its release position.

10. A fixing device according to claim 9, **characterised in that** the blocking member (2) is mounted so as to be pivotable about the same axis (31) as the clamping member (1).

11. A fixing device according to any one of claims 1 to 10, **characterised in that** the blocking member (2) has a contact surface (50) which, in the blocking position for blocking the lifting of the counterfixing part (4) from the fixing part (3), is placeable against a countercontact surface (51) of the counterfixing part or a counterpressure part (13).

12. A fixing device according to claim 11, **characterised in that** the contact surface (50) and the countercontact surface (51) end in steps, and the step of the contact surface (50) is conveyed over the step of the countercontact surface (51) during displacement of the blocking member (2) into its release position.

13. A fixing device according to claim 11 or claim 12, **characterised in that** the contact surface (50) is arranged on the front of at least one projection (49) of the blocking member (2).

14. A fixing device according to any one of claims 11 to 13, **characterised in that** the countercontact surface (51) is arranged on the front of at least one projection (52) of the counterfixing part (4) or the counterpressure part (13).

15. A fixing device according to any one of claims 1 to 14, **characterised in that**, to provide the coupling between the clamping member (1) and the blocking member (2), the clamping member (1) has a stop (43) which, during the displacement of the clamping member (1) from its closed position towards its open position over the first part (d) of the displacement path, strikes a counterstop (115) of the blocking member (2) and subsequently carries the blocking member (2) with it.

16. A fixing device according to any one of claims 1 to 15, **characterised in that**, to pivot the clamping member (1) between its closed position and its open position, an operating arm (35) is provided which is arranged on the clamping member (1) or is connected thereto.

17. A fixing device according to claim 16, **characterised in that** the operating arm (35) is moved under the action of a spring (37) into the pivoted position in which the clamping member (1) is in its closed position.

18. A fixing device according to any one of claims 1, to 17, **characterised in that** the clamping member (1) is pivotably mounted on a clamping bolt (18).

19. A fixing device according to claim 18, **characterised in that** the clamping bolt (18) is displaceable in the closing direction (6) of the counterfixing part (4) and engages the counterfixing part (4) for displacement of the same in the direction of the fixing part (3), and **in that** a pressure surface (40) of the clamping member (1) in the closed position thereof lies against a counterpressure part (13) which is non-displaceable in the closing direction.

20. A fixing device according to claim 18, **characterised in that** the clamping bolt (18) is non-displaceably mounted in the closing direction (6), and a pressure surface (40) of the clamping member (1) in the closed position thereof lies against a counterpressure part (13) which is displaceable in the closing direction (6), wherein the counterpressure part (13) presses the counterfixing part (4) against the fixing part (3), directly or with the interposition of further parts (101) which are displaceable in the closing direction (6) (figs. 30-42).

21. A fixing device according to any one of claims 18 to 20, **characterised in that** the blocking member (2) is pivotably mounted on the clamping bolt (18).

22. A fixing device according to claim 21, **characterised in that** the blocking member (2) co-operates with the same counterpressure part (13) as the clamping member (1).

23. A fixing device according to any one of claims 17, 20 or 21, **characterised in that** the counterpressure part (13) is mounted on a side wall (12), which is non-displaceable in the closing direction (6), so as to be displaceable in a displacement direction (5) between the fixing part (3) and the counterfixing part (4), and the clamping bolt (18) extends through an opening in the side wall (12) and is displaceable in this opening (20) in relation to the side wall (12) in the displacement direction (5).

24. A fixing device according to claim 23, **characterised in that** the fixing part (3) is formed by an opposing side wall which is non-displaceable in the closing direction (6), and the clamping bolt (18) also extends through an opening (21) in this side wall, wherein the clamping bolt (18) is displaceable in relation to the side wall in the displacement direction (5) between the fixing part (3) and the counterfixing part (4).

25. A fixing device according to any one of claims 20 to 22, **characterised in that** the clamping bolt (18) extends through a bore (88) in the counterfixing part (4), and the counterfixing part (4) is mounted on the clamping bolt (18) so as to be displaceable in the closing direction (6) (figs. 30-42).

26. A fixing device according to claim 25, **characterised in that** a pressure lever (101) is also mounted on the clamping bolt (18) so as to be displaceable in the closing direction (6), wherein toothings (109, 110; 107, 108) on the pressure lever (101) and on a portion (81) of the casing tube (10) fixed to the chassis are in engagement with each other in the closed position of the clamping member (1), and these toothings are spaced apart in the open position of the clamping member (1), in which case length adjustment of the steering column is enabled.

27. A fixing device according to any one of claims 1 to 26, **characterised in that** casing tube (10), which mounts the steering spindle (9), has a portion (67) which is adjacent to the steering wheel (66) and which, for the height adjustment of the steering column, is pivotable in relation to a portion (68) located further away from the steering wheel (66).

28. A fixing device according to claim 27, **characterised in that** the portion (68) located further away from the steering wheel (66) is mounted in a portion (81) of the casing tube (10) so as to be displaceable in the longitudinal direction of the portion (81), which is located even further away from the steering wheel (66).

29. A fixing device according to any one of claims 1 to 28, **characterised in that** the teeth (56-59) of the toothings (14-17) extend perpendicularly to the displacement direction (5) between the fixing part (3) and the counterfixing part (4), and consecutive teeth (56-59) of the toothings (14-17) each have equal spacing, and the tips of the teeth (56-59) of the toothings (14-17) each lie in a plane (60-63), wherein the planes (60, 61) of the toothings (14, 15) and the planes (62, 63) of the teeth (58, 59) of the toothings (16, 17) are arranged in the shape of a V and form equal angles and wherein an offset (v), which forms part of the spacing (a) between consecutive teeth (56-59), is provided between the teeth (56, 57) of the toothings (14, 15) of the fixing part or between the teeth (58, 59) of the toothings (16, 17) of the counterfixing part in the displacement direction (5).

30. A fixing device according to claim 29, **characterised in that** the offset (v) forms half the spacing (a) between consecutive teeth (56-59).

## Revendications

1. Installation de blocage d'une colonne de direction réglable au moins en hauteur ayant un dispositif de serrage susceptible d'être ouvert et fermé, ayant un organe de serrage 1 réglable sur une course de réglage entre une position d'ouverture et une position de fermeture, et avec dans sa position d'ouverture, des dentures 14, 15 ; 16, 17 d'au moins une pièce de blocage 3 et d'au moins une pièce de blocage complémentaire 4 qui sont écartées l'une de l'autre pour libérer le réglage en hauteur, alors qu'en passant de la position d'ouverture à sa position de fermeture, les dentures 14, 15 ; 16, 17 sont déplacées contre la force d'au moins un ressort 30 agissant entre la pièce de blocage 3 et la pièce de blocage complémentaire 4 dans le sens de fermeture 6, en se rapprochant l'une de l'autre et en venant en prise l'une avec l'autre,
dans laquelle
le dispositif de serrage comporte au moins un organe de blocage 2 qui présente une position de blocage dans laquelle il bloque le soulèvement de la pièce de blocage complémentaire 4 par rapport à la pièce de blocage fixe 3 et maintient en prise les dentures 14, 15 ; 16, 17, et une position de libération dans laquelle la pièce de blocage complémentaire 4 est soulevée de la pièce de blocage 3 et les dentures 14, 15 ; 16, 17 sont hors prise,
**caractérisée par**,
un couplage entre l'organe de serrage 1 et l'organe de blocage 2, tandis que lorsque l'organe de serrage 1 se déplace, partant de la position de fermeture de l'organe de serrage en direction de la position d'ouverture de l'organe de serrage, l'organe de blocage 2 se trouve en position de blocage pendant une première partie d de la course de réglage de l'organe de serrage 1 de blocage, alors que pour un autre déplacement de l'organe de serrage en direction de sa position d'ouverture, on a un déplacement de l'organe de blocage 2 dans sa position de libération,
l'organe de blocage 2 ne prenant la position de libération que si l'organe de serrage 1 a déjà libéré le soulèvement de la pièce de blocage complémentaire 4 par rapport à la pièce de blocage 3 par la force d'au moins un ressort 30 dans la mesure où les dentures 14, 15 ; 16, 17 sont hors prise.

2. Installation de blocage selon la revendication 1,
**caractérisée en ce que**
cette première partie d de la course de réglage, à partir de la position de fermeture en direction de la position d'ouverture, correspond à la plus grande partie de la course de réglage totale e entre la position de fermeture et la position d'ouverture, et représente de préférence plus des trois quarts de l'ensemble de la course de réglage.

3. Installation de blocage selon l'une quelconque des revendications 1 ou 2,
**caractérisée en ce que**
le passage entre la position de blocage et la position de libération de l'organe de blocage 2 est brusque.

4. Installation de blocage selon l'une quelconque des revendications 1 à 3,
**caractérisée en ce que**
lors du réglage de l'organe de serrage 1 à partir de sa position d'ouverture en direction de sa position de fermeture, l'organe de blocage 2, se trouve dans sa position de libération pendant une première partie f de la course de réglage de l'organe de serrage 1 en direction de fermeture, et ce n'est que lorsqu'on poursuit le réglage de l'organe de serrage dans le sens de la fermeture que l'organe de blocage 2 se déplace dans sa position de blocage.

5. Installation de blocage selon la revendication 4,
**caractérisée en ce que**
la première partie f de la course de réglage dans la direction de fermeture correspond à la plus grande partie de toute la de réglage e et représente de préférence plus des trois quarts de l'ensemble de la course de réglage.

6. Installation de blocage selon l'une quelconque des revendications 1 à 5,
**caractérisée en ce que**
l'organe de blocage 2 est sollicité par au moins un ressort 46 dans le sens de sa position de blocage.

7. Installation de blocage selon l'une quelconque des revendications 1 à 6,
**caractérisée en ce que**
l'organe de serrage 1 est basculé autour d'un axe 31 pour être déplacé entre sa position de fermeture et sa position d'ouverture, sur une plage de basculement formant la course de réglage.

8. Installation de blocage selon la revendication 7,
**caractérisée en ce que**
l'axe 31 est perpendiculaire à la direction de fermeture 6.

9. Installation de blocage selon l'une quelconque des revendications 1 à 8,
**caractérisée en ce que**
l'organe de blocage 2 peut basculer pour être réglé entre sa position de blocage et sa position de libération.

10. Installation de blocage selon la revendication 9,
**caractérisée en ce que**
l'organe de blocage 2 est monté basculant autour du même axe 31 que l'organe de serrage 1.

11. Installation de blocage selon l'une quelconque des revendications 1 à 10,
**caractérisée en ce que**
l'organe de blocage 2 a une surface d'appui 51 qui, en position de blocage pour bloquer le soulèvement de la pièce de blocage complémentaire 4, est appliqué par la pièce de blocage 3 contre une surface d'appui complémentaire 51 de la pièce de blocage complémentaire ou d'une pièce de poussée complémentaire 13.

12. Installation de blocage selon la revendication 11,
**caractérisée en ce que**
la surface d'appui 50 et la surface d'appui opposée 51 se terminent par des gradins, et en cas de réglage de l'organe de blocage 2 dans sa position de libération, on fait passer le gradin de la surface d'appui 50 pardessus le gradin de la surface d'appui complémentaire 51.

13. Installation de blocage selon l'une quelconque des revendications 11 ou 12,
**caractérisée en ce que**
la surface d'appui 50 est prévue sur la face frontale d'au moins un bec 49 de l'organe de blocage 2.

14. Installation de blocage selon l'une quelconque des revendications 11 à 13,
**caractérisée en ce que**
la surface d'appui complémentaire 51 est prévue sur la face frontale d'au moins un bec 52 de la pièce d'appui complémentaire 4 ou de la pièce de pression complémentaire 13.

15. Installation de blocage selon l'une quelconque des revendications 1 à 14,
**caractérisée en ce que**
l'organe de serrage 1 comporte une butée 43 pour le couplage entre l'organe de serrage 1 et l'organe de blocage 2, et cette butée lors du réglage de l'organe de serrage 1 de sa position de fermeture en direction de sa position d'ouverture, bute au cours de la première partie d de la course de réglage contre une butée opposée 115 de l'organe de blocage 2 et entraîne ensuite l'organe de blocage 2.

16. Installation de blocage selon l'une quelconque des revendications 1 à 15,
**caractérisée en ce que**
pour basculer l'organe de serrage 1 entre sa position de fermeture et sa position d'ouverture, un levier de manoeuvre 35 est prévu sur l'organe de serrage 1 ou est relié à lui.

17. Installation de blocage selon la revendication 16,
**caractérisée en ce que**
le bras de manoeuvre 35 est sollicité par un ressort 37 dans la position de basculement dans laquelle l'organe de serrage 1 se trouve en position de fermeture.

18. Installation de blocage selon l'une quelconque des revendications 1 à 17,
**caractérisée en ce que**
l'organe de serrage 1 est monté pivotant sur un goujon de serrage 18.

19. Installation de blocage selon la revendication 18,
**caractérisée en ce que**
le goujon de serrage 18 coulisse dans la direction de fermeture 6 de la pièce de blocage complémentaire 4 et attaque la pièce de blocage complémentaire 4 pour la coulisser en direction de la pièce de blocage 3, et l'organe de serrage 1, en position de fermeture, s'appuie par sa surface de poussée 40 contre la pièce de poussée complémentaire 13 bloquée dans la direction de fermeture.

20. Installation de blocage selon la revendication 18,
**caractérisée en ce que**
le goujon de serrage 18 est monté non coulissant dans la direction de fermeture 6, et l'organe de serrage 1 dans sa position de fermeture est appliqué par une surface de poussée 40 contre une pièce de poussée complémentaire 13 coulissant dans la direction de fermeture 6,
la pièce de poussée complémentaire 13 poussant la pièce de blocage complémentaire 4 contre la pièce de blocage 3, directement ou par l'intermédiaire d'au moins d'autres pièces 101 coulissant dans la direction de fermeture 6 (figures 30-42).

21. Installation de blocage selon l'une quelconque des revendications 18 à 20,
**caractérisée en ce que**
l'organe de blocage 2 est monté pivotant sur le goujon de serrage 18.

22. Installation de blocage selon la revendication 21,
**caractérisée en ce que**
l'organe de blocage 2 coopère avec la même pièce de poussée complémentaire 13 que l'organe de serrage 1.

23. Installation de blocage selon l'une quelconque des revendications 17, 20, 21,
**caractérisée en ce que**
la pièce de poussée complémentaire 13 est coulissante sur une paroi latérale 12 bloquée dans la direction de fermeture 6, dans la direction de coulissement 5 entre la pièce de blocage 3 et la pièce de blocage complémentaire 4, et le goujon de serrage 18 traverse une ouverture de la paroi latérale 12 et est coulissant dans cette ouverture 20 par rapport à la paroi latérale 12 dans la direction de coulissement 5.

24. Installation de blocage selon la revendication 23,
**caractérisée en ce que**
la pièce de blocage 3 est formée par une face latérale opposée non coulissante dans la direction de coulissement 6 et le goujon de serrage 18 traverse également par une ouverture 21, en coulissant par rapport à la face latérale dans la direction de coulissement 5 entre la pièce de blocage 3 et la pièce de blocage complémentaire 4

25. Installation de blocage selon l'une quelconque des revendications 20 à 22,
**caractérisée en ce que**
la pièce de blocage complémentaire 4 est traversée par le goujon de serrage 18 passant par un perçage 88, et coulisse sur le goujon dans la direction de fermeture 6 (figures 30-42).

26. Installation de blocage selon la revendication 25,
**caractérisée en ce qu'**
en outre, un levier de poussée 101 est monté coulissant sur le goujon de serrage 18 dans le sens de fermeture 6, les dentures 109, 110 ; 107, 108 du levier de poussée 101 et d'un segment 81 solidaire du châssis du tube enveloppe 10 étant en prise l'une avec l'autre en position de fermeture de l'organe de serrage 1, et ces dentures sont écartées l'une de l'autre dans la position d'ouverture de l'organe de serrage 1, en libérant le réglage longitudinal de la colonne de direction.

27. Installation de blocage selon l'une quelconque des revendications 1 à 26,
**caractérisée en ce que**
le tube enveloppe 10 logeant la broche de la colonne de direction 9 comporte un segment 67 voisin du volant 66 et qui peut pivoter par rapport au segment 68 éloigné du volant 66 pour le réglage en hauteur de la colonne de direction.

28. Installation de blocage selon la revendication 27,
**caractérisée en ce que**
le segment 68 éloigné du volant de direction 66 est monté coulissant dans un segment 81 du tube enveloppe 10 plus éloigné encore du volant 66, ce coulissement se faisant dans la direction longitudinale du segment 81.

29. Installation de blocage selon l'une quelconque des revendications 1 à 28,
**caractérisée en ce que**
les dents 56, 59 des dentures 14-17 sont perpendiculaires à la direction de coulissement 5 entre la pièce de blocage 3 et la pièce complémentaire de blocage 4, les dents qui se suivent 56-59 des dentures 14-17 ont chaque fois les mêmes intervalles, et les pointes de dents 56-57 des dentures 14-17 sont situées chaque fois dans un plan 60-63, les plans 60, 61 des dentures 14, 15 ainsi que les plans 62, 63 des dents 58, 59 des dentures 16, 17 sont disposés suivant une forme en V les uns par rapport aux autres et englobent le même angle, et entre les dents 56, 57 des dentures 14, 15 de la pièce de blocage ou entre les dents 58, 59 des dentures 16, 17 de la pièce de blocage complémentaire, il y a un décalage ν dans la direction de coulissement 5, ce décalage correspondant à une partie de la distance entre les dents successives 56-59.

30. Installation de blocage selon la revendication 29,
**caractérisée en ce que**
le décalage ν correspond à la moitié de la distance a entre les dents successives 56-59.
